# EUROPEAN PATENT APPLICATION

(11) **EP 4 583 587 A1**
(43) Date of publication of application: **09.07.2025**
(21) Application number: 24813829.9
(22) Date of filing: 19.03.2024
(51) Int. Cl.: H04W 48/18

(54) **ROUTER CONNECTING METHOD AND APPARATUS**

(30) Priority: 31.05.2023 CN 202310644223
(71) Applicant: Honor Device Co., Ltd., Shenzhen, Guangdong 518040 (CN)
(72) Inventor: SHI, Lei, Shenzhen, Guangdong 518040 (CN); LI, Jin, Shenzhen, Guangdong 518040 (CN); CUI, Changhua, Shenzhen, Guangdong 518040 (CN); SHAO, Lei, Shenzhen, Guangdong 518040 (CN)
(74) Representative: Goddar, Heinz J.
(86) International application number: PCT/CN2024/082420
(87) International publication number: WO 2024/244623

(57) **Abstract**

Embodiments of this application provide a router connection method and apparatus. The method includes: establishing the first WIFI connection with a terminal device based on the first WIFI SSID and the first WIFI password; transmitting a second WIFI SSID and a second WIFI password to the terminal device based on the first WIFI connection; and establishing a second WIFI connection with the terminal device based on the second WIFI SSID and the second WIFI password. In this way, the router can realize a local area network connection with the terminal device through first WIFI and acquire information of second WIFI through the local area network connection, thereby realizing a WIFI connection with the router, so that WIFI of the router can be connected without requiring a user to enter information such as a WIFI password, providing the user with a better connection experience.

## Description

This application claims priority to Chinese Patent Application No. 202310644223.0, filed with the China National Intellectual Property Administration on May 31, 2023 and entitled "ROUTER CONNECTION METHOD AND APPARATUS", which is incorporated herein by reference in its entirety.

### TECHNICAL FIELD

This application relates to the field of terminal technologies, and in particular, to a router connection method and apparatus.

### BACKGROUND

With the popularization and development of the Internet, a wireless fidelity (wireless fidelity, WIFI) technology is widely used in scenarios such as daily life and offices. The WIFI technology is a wireless local area network technology based on an institute of electrical and electronics engineers (institute of electrical and electronics engineers, IEEE) 802.11 standard.

Generally, in a scenario where a terminal device is connected to routed WIFI, the terminal device may turn on WIFI search in a setup function based on a user operation, select any WIFI to be connected, input a WIFI password, and then be successfully connected to the WIFI.

However, the above router connection method is relatively cumbersome.

### SUMMARY

Embodiments of this application provide a router connection method and apparatus, in which when a terminal device acquires a first WIFI SSID and a first WIFI password based on a target two-dimensional code, a router can realize a local area network connection with the terminal device and return a second WIFI SSID and a second WIFI password to the terminal device through the local area network connection, thereby realizing a WIFI connection with the router, so that WIFI of the router can be connected without requiring a user to actively enter information such as a WIFI password, providing the user with a better connection experience.

According to a first aspect, an embodiment of this application provides a router connection method, applied to a router, the method including: establishing a first WIFI connection with a terminal device based on a first WIFI SSID and a first WIFI password, the first WIFI SSID and the first WIFI password being determined based on attribute parameters of the router indicated in a target two-dimensional code, the target two-dimensional code being a two-dimensional code corresponding to the router; transmitting a second WIFI SSID and a second WIFI password to the terminal device based on the first WIFI connection; and establishing a second WIFI connection with the terminal device based on the second WIFI SSID and the second WIFI password. In this way, when the terminal device acquires the first WIFI SSID and the first WIFI password based on the target two-dimensional code, the router can realize a local area network connection with the terminal device and return the second WIFI SSID and the second WIFI password to the terminal device through the local area network connection, thereby realizing a WIFI connection with the router, so that WIFI of the router can be connected without requiring the user to actively enter information such as a WIFI password, providing the user with a better connection experience.

In a possible implementation, the first WIFI connection is a local area network connection. In this way, the router can return WIFI information capable of Internet access, for example, the second WIFI SSID and the second WIFI password, to the terminal device through the local area network connection, thereby realizing the second WIFI connection with the terminal device.

In a possible implementation, after the establishing a second WIFI connection, the method further includes: receiving a first data packet from the terminal device based on the second WIFI connection, the first data packet being a data packet accessing a network server through the router; and transmitting a second data packet to the terminal device, the second data packet being a response data packet generated when the network server receives the first data packet. In this way, the router and the terminal device can access the Internet through established second WIFI. For example, the router may forward, based on the second WIFI connection, the first data packet acquired from the terminal device to the network server, and return a second response data packet to the terminal device.

In a possible implementation, after the establishing a second WIFI connection, the method further includes: turning off the first WIFI connection. In this way, when the second WIFI connection is established, the router and the terminal device can reduce resource consumption by turning off the first WIFI connection.

In a possible implementation, the second WIFI SSID is changed to a third WIFI SSID, and/or the second WIFI password is changed to a third WIFI password, and the method further includes: establishing the first WIFI connection with the terminal device based on the first WIFI SSID and the first WIFI password; transmitting attribute information of third WIFI to the terminal device based on the first WIFI connection, the attribute information of the third WIFI including: the third WIFI SSID and the third WIFI password; and establishing a third WIFI connection with the terminal device based on the attribute information of the third WIFI. In this way, even if the second WIFI password is changed, the router can also establish the first WIFI connection with the terminal device through the first WIFI SSID and the first WIFI password and return the third WIFI SSID and the third WIFI password to the terminal device on the basis of the first WIFI connection, thereby establishing the second WIFI connection with the terminal device, to reduce trouble caused by the user remembering WIFI passwords.

In a possible implementation, the attribute parameters of the router include a serial number SN of the router, and the first WIFI SSID and the first WIFI password are determined based on the SN of the router.

It may be understood that the SN of the router is unique, and the first WIFI SSID and the first WIFI password parsed through the SN are also unique. Therefore, regardless of whether the user knows a WIFI password, the terminal device can use the SN in the attribute parameters of the router to parse out the first WIFI SSID and the first WIFI password, realize the local area network connection with the router, and acquire WIFI connection information capable of Internet access in the case of the local area network connection.

In a possible implementation, the transmitting a second WIFI SSID and a second WIFI password to the terminal device based on the first WIFI connection includes: receiving a first request from the terminal device based on the first WIFI connection; and transmitting a first message to the terminal device, the first message including the second WIFI SSID and the second WIFI password, and the first message being a message generated by the router in response to the first request. In this way, when the router and the terminal device establish the local area network connection, the router can transmit the WIFI connection information capable of Internet access to the terminal device, thereby realizing a WIFI connection between the terminal device and the router.

The first request may be a request for acquiring routing information described in S1310. The first message may include routing information described in S1311.

In a possible implementation, before the receiving a first request from the terminal device, the method further includes: receiving a second request from the terminal device; and transmitting a second message to the terminal device, the second message including a symmetric key, the second message being a message generated by the router in response to the second request, and the first message being a message generated by the router by encrypting the second WIFI SSID and the second WIFI password with the symmetric key. In this way, the router can return, through the second request and the second message, a symmetric key supported by the router to the terminal device. In this way, a communication link between the router and the terminal device can be encrypted based on the symmetric key, to ensure security of data transmission.

In a possible implementation, the first message further includes: information used to indicate whether wizard configuration of the router is completed, and the method further includes: receiving a fourth request from the terminal device when the information used to indicate whether wizard configuration of the router is completed indicates that the router does not complete the wizard configuration; and transmitting a fourth message to the terminal device, the fourth message being a message generated by the router in response to the fourth request, the fourth message including an Internet access manner of the router, the Internet access manner of the router including: a point-to-point protocol over Ethernet PPPOE or a dynamic host configuration protocol DHCP. In this way, the router can return, through the fourth request and the fourth message, the Internet access manner acquired by the router to the terminal device, so that the terminal device can realize subsequent display of a configuration interface corresponding to the Internet access manner.

According to a second aspect, an embodiment of this application provides a router connection method, the method including: receiving a first operation of scanning, by a user, a target two-dimensional code, the target two-dimensional code being a two-dimensional code corresponding to a router; acquiring, in response to the first operation, a first WIFI SSID and a first WIFI password based on the target two-dimensional code, the first WIFI SSID and the first WIFI password being determined based on attribute parameters of the router; establishing a first WIFI connection with the router based on the first WIFI SSID and the first WIFI password; acquiring a second WIFI SSID and a second WIFI password from the router based on the first WIFI connection; and establishing a second WIFI connection with the router based on the second WIFI SSID and the second WIFI password. In this way, the terminal device can first establish a local area network connection with the router by directly scanning the target two-dimensional code preset by the router, automatically acquire WIFI connection information capable of Internet access through the local area network connection, and then establish a WIFI connection capable of Internet access through the router. Therefore, WIFI can be automatically connected by only requiring the user to scan the target two-dimensional code preset by the router instead of requiring the user to enter information such as a WIFI password, which provides the user with a better connection experience.

In a possible implementation, the first WIFI connection is a local area network connection. In this way, the terminal device can establish local area network communication with the router through the first WIFI connection, so that the terminal device can automatically acquire, through the local area network communication, WIFI connection information capable of Internet access, for example, the second WIFI SSID and the second WIFI password, and then can establish a WIFI connection capable of Internet access with the router.

The target two-dimensional code may be a mini program code described in this embodiment of this application.

In a possible implementation, after the establishing a second WIFI connection, the method further includes: transmitting a first data packet to the router based on the second WIFI connection, the first data packet being a data packet accessing a network server through the router; and receiving a second data packet from the router, the second data packet being a response data packet generated when the network server receives the first data packet. In this way, the terminal device and the router can access the Internet through the established second WIFI connection. For example, the router may forward, based on the second WIFI connection, the first data packet acquired from the terminal device to the network server, and return a second response data packet to the terminal device.

In a possible implementation, after the establishing a second WIFI connection, the method further includes: turning off the first WIFI connection. In this way, when the second WIFI connection is established, the terminal device and the router can reduce resource consumption by turning off the first WIFI connection.

In a possible implementation, the second WIFI SSID is changed to a third WIFI SSID, and/or the second WIFI password is changed to a third WIFI password, and the method further includes: receiving a second operation of scanning, by the user, the target two-dimensional code; acquiring, in response to the second operation, the first WIFI SSID and the first WIFI password based on the target two-dimensional code; establishing a first WIFI connection with the router based on the first WIFI SSID and the first WIFI password; acquiring attribute information of third WIFI from the router based on the first WIFI connection, the attribute information of the third WIFI including: the third WIFI SSID and the third WIFI password; and establishing a third WIFI connection with the router based on the attribute information of the third WIFI. In this way, even if the second WIFI password is changed, the first WIFI connection can be established with the router again by scanning the target two-dimensional code, and then the changed third WIFI SSID and third WIFI password can be acquired from the router, reducing trouble caused by the user remembering WIFI passwords.

In the attribute information of the third WIFI, the third WIFI SSID is the same as the second WIFI SSID and the third WIFI password is different from the second WIFI password, or the third WIFI SSID is different from the second WIFI SSID and the third WIFI password is the same as the second WIFI password, or the third WIFI SSID is different from the second WIFI SSID and the third WIFI password is different from the second WIFI password.

In a possible implementation, after the establishing a second WIFI connection, the method further includes: receiving a third operation of the user; and transmitting the attribute information of the third WIFI to the router in response to the third operation, the attribute information of the third WIFI being obtained by adjusting attribute information of second WIFI based on the third operation, the attribute information of the second WIFI including: the second WIFI SSID and the second WIFI password. In this way, the user can flexibly modify the second WIFI SSID and the second WIFI password, and the attribute information of the third WIFI after the modification can be transmitted to the router, so that the terminal device can acquire the attribute information at any time.

In a possible implementation, the attribute parameters of the router include a serial number SN of the router, and the first WIFI SSID and the first WIFI password are determined based on the SN of the router.

It may be understood that the SN of the router is unique, and the first WIFI SSID and the first WIFI password parsed through the SN are also unique. Therefore, regardless of whether the user knows a WIFI password, the terminal device can use the SN in the attribute parameters of the router to parse out the first WIFI SSID and the first WIFI password, realize the local area network connection with the router, and acquire WIFI connection information capable of Internet access in the case of the local area network connection.

In a possible implementation, the acquiring a second WIFI SSID and a second WIFI password from the router based on the first WIFI connection includes: transmitting a first request to the router based on the first WIFI connection; and receiving a first message from the router, the first message including the second WIFI SSID and the second WIFI password, and the first message being a message generated by the router in response to the first request. In this way, when the terminal device establishes the local area network connection with the router, the terminal device can acquire the WIFI connection information capable of Internet access, for example, a second WIFI SSID and a second WIFI password of the router that are real, thereby realizing a WIFI connection between the terminal device and the router.

The first request may be a request for acquiring routing information described in S1310. The first message may include routing information described in S1311.

In a possible implementation, before the transmitting a first request, the method further includes: transmitting a second request to the router; and receiving a second message from the router, the second message including a symmetric key, the second message being a message generated by the router in response to the second request, and the first message being a message generated by the router by encrypting the second WIFI SSID and the second WIFI password with the symmetric key. In this way, the terminal device can acquire, through the second request and the second message, a symmetric key supported by the router. In this way, a communication link between the terminal device and the router can be encrypted based on the symmetric key, to ensure security of data transmission.

The second request may be a request for acquiring a symmetric key described in S1308. The second message may include a symmetric key described in S1309.

In a possible implementation, before the establishing a first WIFI connection, the method further includes: acquiring a uniform resource locator URL from the target two-dimensional code; transmitting a third request to a first server, the third request including the URL; and receiving a third message from the first server, and displaying first prompt information in a first interface, the third message including at least one interface information corresponding to the URL, the at least one interface information including interface information corresponding to the first interface, the third message being a message generated by the server in response to the third request, and the first prompt information being used to prompt the terminal device to enter a scan-to-connect system. In this way, the terminal device can pull, through the URL acquired from the target two-dimensional code, a mini program and display the first interface to enrich the user's experience of using the scan-to-connect system.

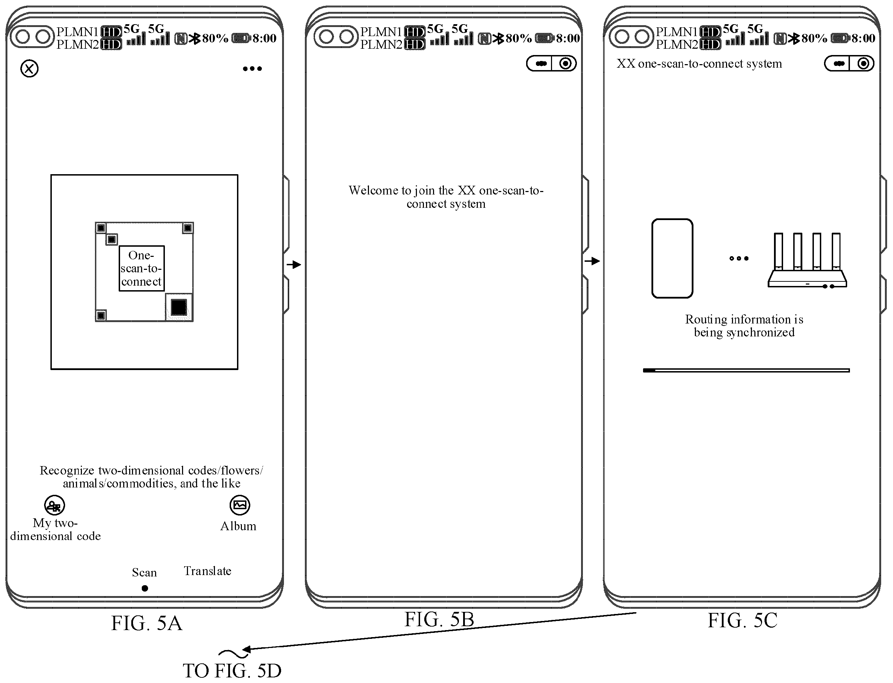

The third request may be a request for acquiring a mini program page described in S1303. The third message may include page information corresponding to a mini program described in S1304. The first interface may be an interface shown in FIG. 5B. The first prompt information may be prompt information described in the interface shown in FIG. 5B that is used to prompt that the user is welcomed to join a one-scan-to-connect system.

In a possible implementation, after the displaying first prompt information in a first interface, the method further includes: displaying second prompt information in a second interface, the second prompt information being used to prompt that the terminal device is synchronizing first information, the first information including: the second WIFI SSID and the second WIFI password.

The second interface may be an interface shown in FIG. 5C. The first information may be routing information described in this embodiment of this application. The second prompt information may be prompt information shown in FIG. 5C that is used to prompt that routing information is being synchronized.

In a possible implementation, after the acquiring a second WIFI SSID and a second WIFI password from the router, the method further includes: displaying third prompt information and fourth prompt information sequentially in the second interface, the third prompt information being used to prompt that the first information is synchronized successfully in the terminal device, and the fourth prompt information being used to prompt that the terminal device is connecting to WIFI of the router. In this way, the user can confirm, through the third prompt information and the fourth prompt information, different stages at which the terminal device is connected to the WIFI of the router, to enrich the user's experience of using the one-scan-to-connect system.

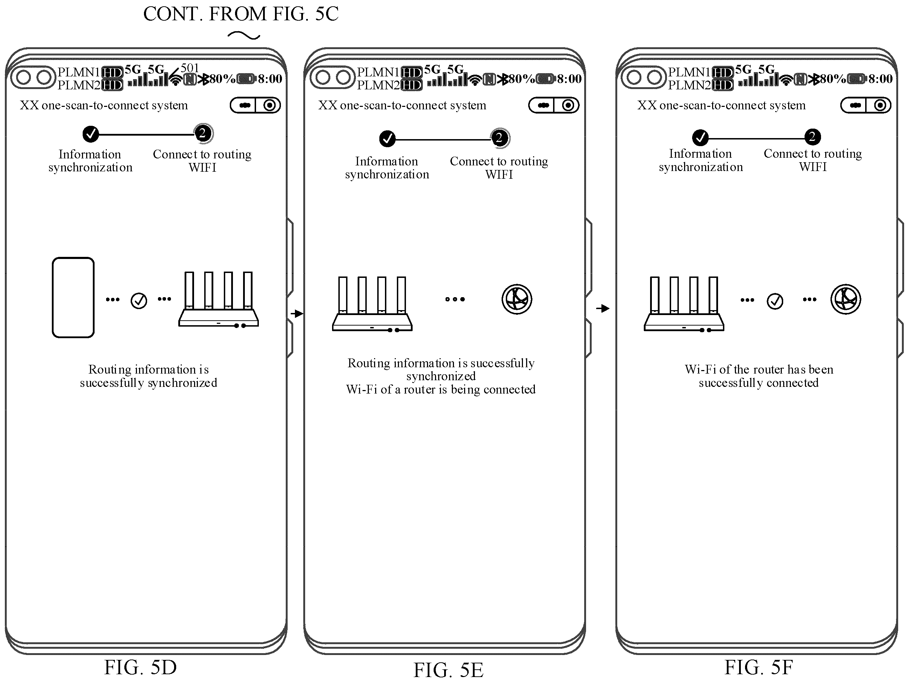

The second interface may be an interface shown in FIG. 5D or an interface shown in FIG. 5E. The third prompt information may be prompt information in the interface shown in FIG. 5D that is used to prompt that routing information is successfully synchronized. The fourth prompt information may be prompt information in the interface shown in FIG. 5E that is used to prompt that WIFI of the router is being connected synchronized.

In a possible implementation, the method further includes: when the first information is not detected, displaying fifth prompt information and sixth prompt information in the second interface, the fifth prompt information being used to prompt that the first information is unsuccessfully synchronized in the terminal device, and the sixth prompt information including at least one strategy used to reacquire the first information. In this way, the user can determine through the fifth prompt information that the first information is not detected, and determine a possible reason for failure of synchronization of the first information through the sixth prompt information, so that the user can promptly repair the connection between the terminal device and the router through the sixth prompt information, to enrich the user's experience of using the one-scan-to-connect system.

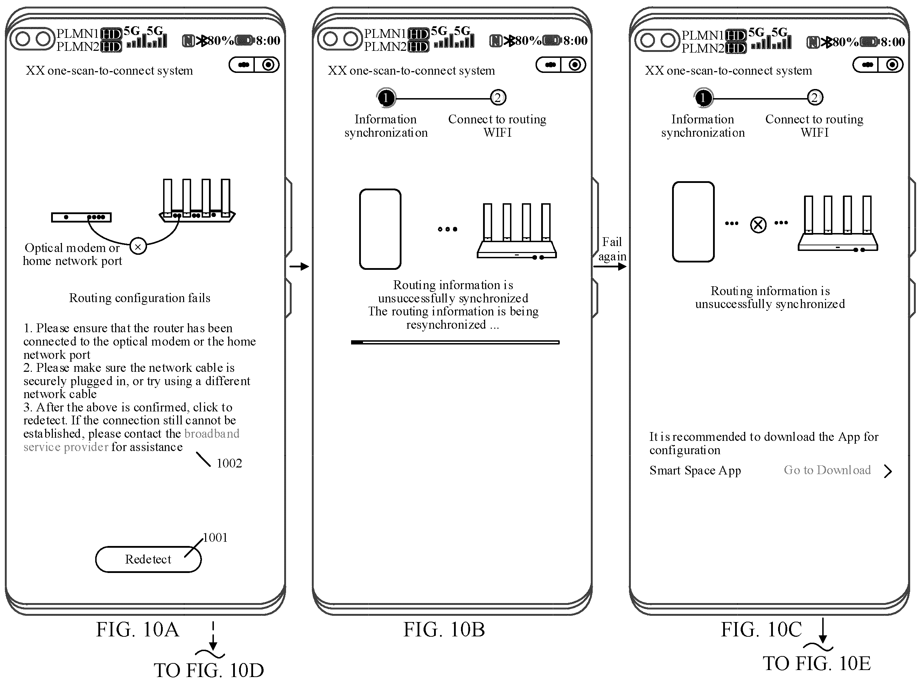

The second interface may be an interface shown in FIG. 10A. The fifth prompt information may be prompt information in the interface shown in FIG. 10A that is used to prompt failure of routing configuration. The sixth prompt information may be prompt information used to prompt the user to adjust a line.

In a possible implementation, after the establishing a second WIFI connection, the method further includes: displaying seventh prompt information in the second interface, the seventh prompt information being used to prompt that the terminal device is successfully connected to the router. In this way, the user can confirm through the seventh prompt information that the terminal device is successfully connected to WIFI of the router, to enrich the user's experience of using a one-scan-to-connect function.

The second interface may be an interface shown in FIG. 5F. The seventh prompt information may be prompt information in the interface shown in FIG. 5F that is used to prompt that the WIFI of the router has been connected to.

In a possible implementation, the first information may further include: information used to indicate whether wizard configuration of the router is completed, and the method further includes: transmitting a fourth request to the router when it is indicated in the information used to indicate whether wizard configuration of the router is completed that the router does not complete the wizard configuration; and receiving a fourth message from the router, the fourth message being a message generated by the router in response to the fourth request, the fourth message including an Internet access manner of the router, the Internet access manner of the router including: a point-to-point protocol over Ethernet PPPOE or a dynamic host configuration protocol DHCP. In this way, the terminal device can acquire, through the fourth request and the fourth message, the Internet access manner from the router, so as to realize subsequent display of a configuration interface corresponding to the Internet access manner.

The fourth request may be a request for acquiring an Internet access manner described in S1401. The fourth message may include an Internet access manner detection result described in S1402.

In a possible implementation, the target two-dimensional code is a mini program code. In this way, the terminal device can make full use of a convenience attribute of the mini program, use the mini program to connect to the WIFI of the router and/or use the mini program to implement routing wizard configuration, making it convenient for ordinary users to connect and configure the router with zero threshold.

In a possible implementation, after the transmitting a fourth request to the router, the method further includes: displaying eighth prompt information in a third interface, the eighth prompt information being used to prompt that the terminal device is detecting an Internet access manner of the router. In this way, the user can learn about different stages of wizard configuration of the router through the eighth prompt information.

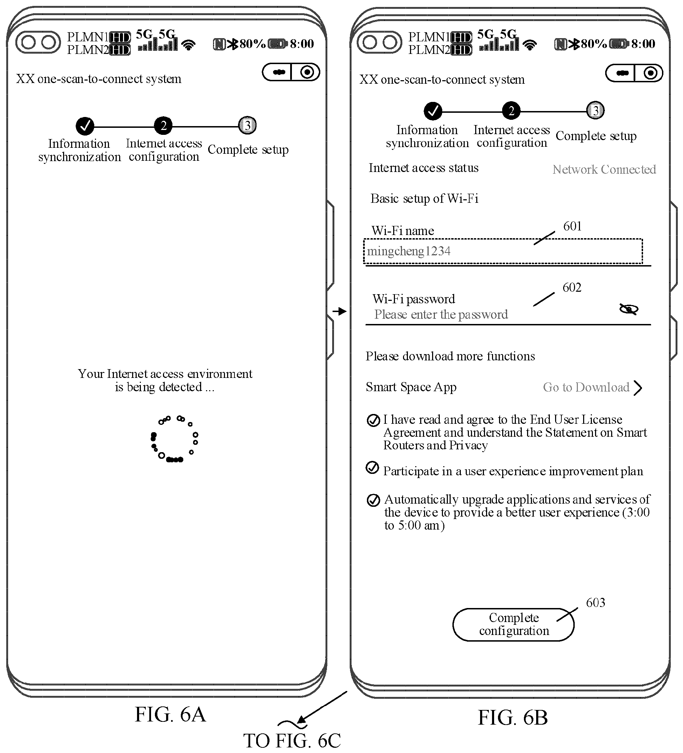

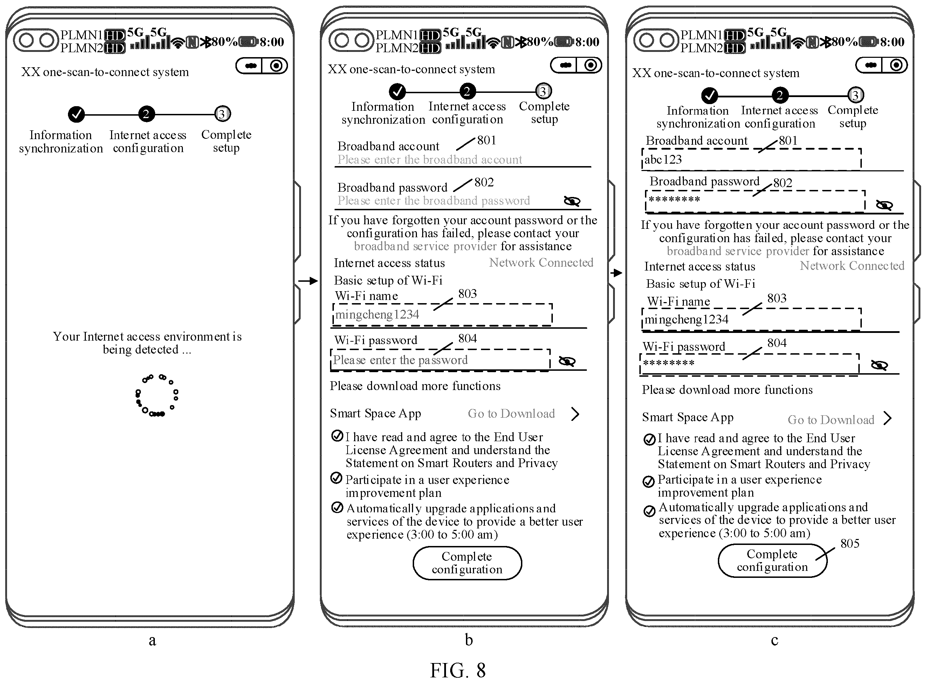

The third interface may be an interface shown in FIG. 6A or an interface shown in a in FIG. 8. The eighth prompt information may be prompt information described in the interface shown in FIG. 6A or the interface shown in a in FIG. 8 that is used to prompt that the Internet access manner of the router is being detected.

In a possible implementation, after the receiving a fourth message from the router, the method further includes: displaying a first control in the third interface, the first control being configured to indicate that the wizard configuration of the router is completed, and when the Internet access manner is the PPPOE, the third interface further including: a text box used to set a second WIFI SSID, a text box used to set a second WIFI password, a text box used to set a broadband account, and a text box used to set a broadband password, or when the Internet access manner is the DHCP, the third interface further including: a text box used to set a second WIFI SSID, and a text box used to set a second WIFI password. In this way, the terminal device can realize the wizard configuration of the router in different Internet access manners, making it convenient for the ordinary users to connect and configure the router with zero threshold.

The third interface may be any interface in FIG. 6B to FIG. 6D or any interface in a in FIG. 8 to c in FIG. 8. The first control may be a configuration completion control 603 described in an embodiment corresponding to FIG. 6A to FIG. 6D or a configuration completion control 805 described in an embodiment corresponding to FIG. 8.

When the Internet access manner is the PPPOE, referring to the embodiment corresponding to FIG. 8, the text box used to set the second WIFI SSID may be a text box 803, the text box used to set the second WIFI password may be a text box 804, the text box used to set the broadband account may be a text box 801, and the text box used to set the broadband password may be a text box 802. Alternatively, when the Internet access manner is the DHCP, referring to the embodiment corresponding to FIG. 6A to FIG. 6D, the text box used to set the second WIFI SSID may be a text box 601, and the text box used to set the second WIFI password may be a text box 602.

In a possible implementation, the Internet access manner is the PPPOE, the wizard configuration of the router includes Internet access manner configuration corresponding to the PPPOE and WIFI configuration of the router, and the method further includes: receiving the user's operation of entering a second WIFI SSID in the text box used to set the second WIFI SSID, entering a second WIFI password in the text box used to set the second WIFI password, entering a broadband account corresponding to the PPPOE in the text box used to set the broadband account, and entering a broadband password corresponding to the PPPOE in the text box used to set the broadband password, and receiving the user's fourth operation on the first control; in response to the fourth operation, transmitting a fifth message to the router, and displaying ninth prompt information in the third interface, the fifth message including: the second WIFI SSID, the second WIFI password, the broadband account corresponding to the PPPOE, and the broadband password corresponding to the PPPOE, the ninth prompt information being used to prompt that the router is storing wizard configuration of the router corresponding to the fourth operation; and displaying tenth prompt information in the third interface when a sixth message from the router is received, the tenth prompt information being used to prompt that the wizard configuration of the router is successful, and the sixth message being a message generated when the router receives the fifth message and it is determined that the wizard configuration of the router is successful; or displaying eleventh prompt information in the third interface when a seventh message from the router is received, the eleventh prompt information being used to prompt that the wizard configuration of the router fails, and the seventh message being a message generated when the router receives the fifth message and it is determined that the wizard configuration of the router fails, where "the wizard configuration of the router fails" includes: Internet access manner configuration corresponding to the PPPOE, and/or WIFI configuration corresponding to the router. In this way, the user can configure a PPPOE-based Internet access manner in the third interface, and can determine configuration of the router based on the tenth prompt information or the eleventh prompt information.

The fifth message may be a message described in S1406 that includes configuration information. The sixth message may be a message described in S1413 that is used to prompt successful configuration. The seventh message may be a message described in S1408 that is used to prompt failure of the Internet access manner configuration, and/or a message described in S1411 that is used to prompt failure of the WIFI configuration.

The tenth prompt information may be prompt information in an interface shown in FIG. 7D or an interface shown in FIG. 9D that is used to prompt completion of the configuration of the router. The eleventh prompt information may be any prompt information in an interface shown in a in FIG. 11, or b in FIG. 11, or c in FIG. 11.

In a possible implementation, the method further includes: transmitting a fifth request to the router, and displaying twelfth prompt information in the third interface, the fifth request being used to request restarting second WIFI of the router, and the twelfth prompt information being used to prompt that the router is restarting the second WIFI; and receiving an eighth message from the router, the eighth message being a message generated by the router in response to the fifth request. After the receiving an eighth message from the router, the method further includes: displaying thirteenth prompt information in the third interface, the thirteenth prompt information being used to prompt that the terminal device is connecting to the second WIFI of the router. In this way, the user can determine, according to the twelfth prompt information and the thirteenth prompt information, different stages at which the terminal device is connected to the router, to enrich the user's experience of using the one-scan-to-connect system.

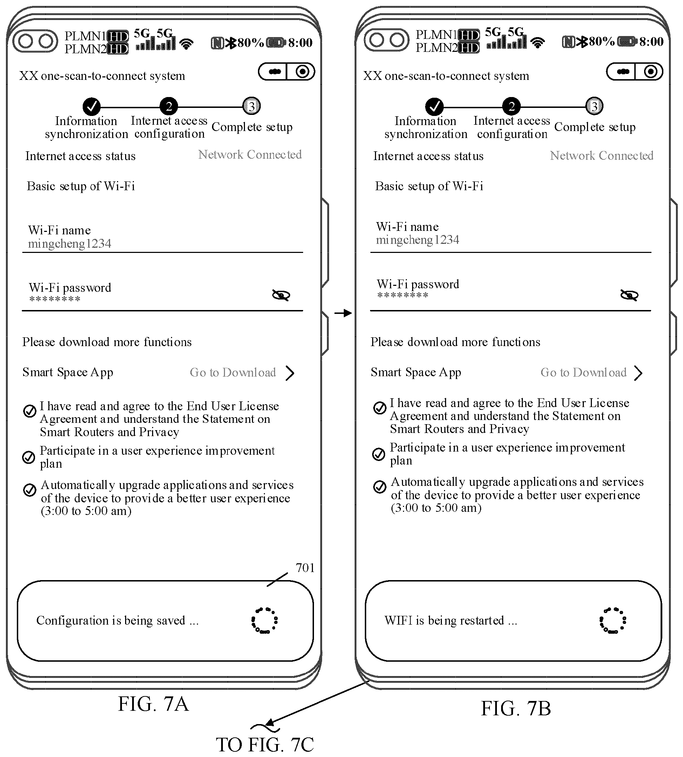

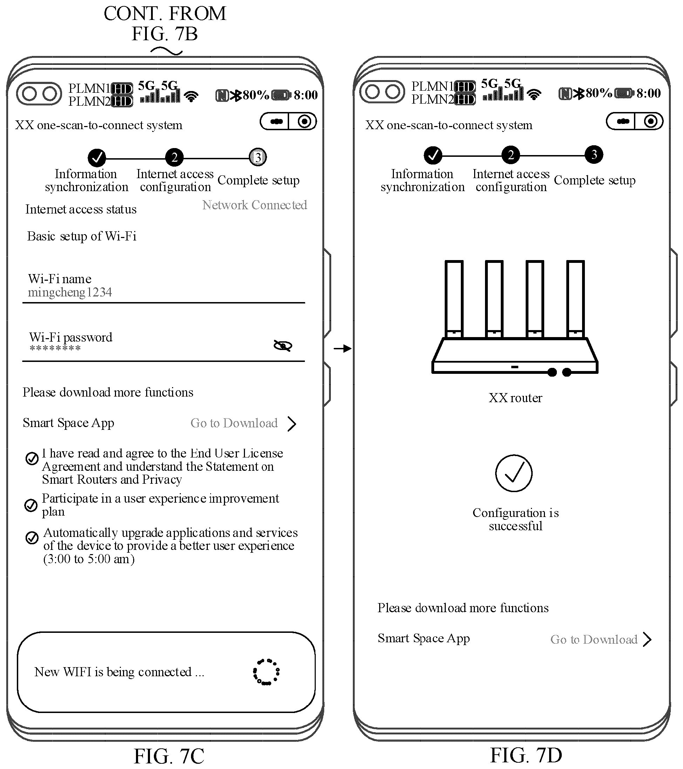

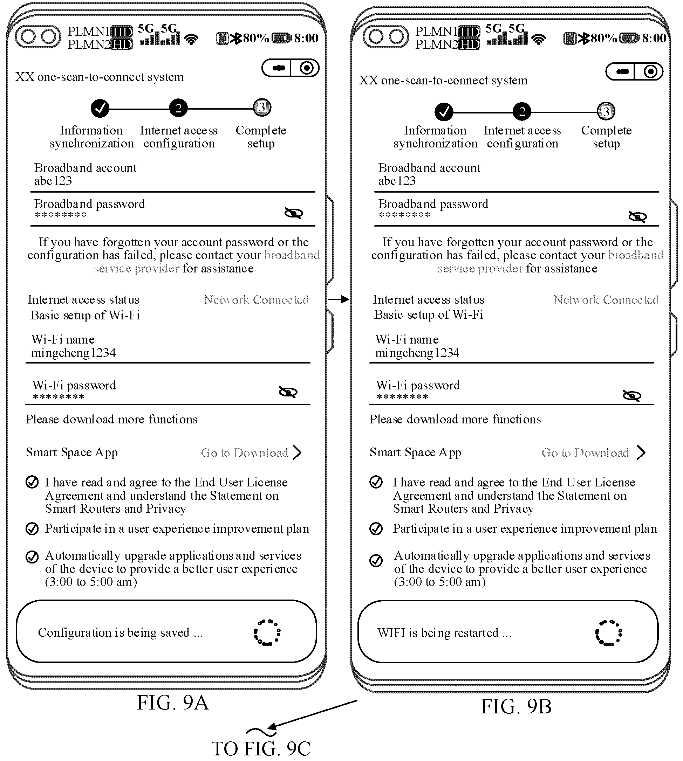

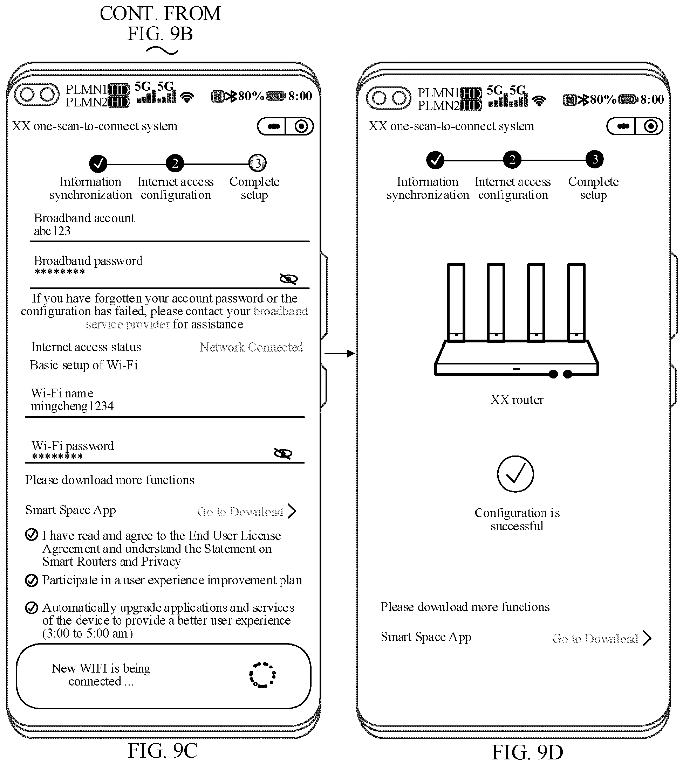

The fifth request may be a request for prompting restarting second WIFI described in S1414. The eighth message may be a message described in S1415 that is used to prompt that the second WIFI is successfully restarted. The twelfth prompt information may be prompt information in an interface shown in FIG. 7B or FIG. 9B that is used to prompt restarting WIFI. The thirteenth prompt information may be prompt information in an interface shown in FIG. 7C or FIG. 9C that is used to prompt reconnecting to the WIFI.

In a possible implementation, the method further includes: displaying fourteenth prompt information in the first interface when it is detected that a model corresponding to the terminal device does not meet a preset model; and/or displaying fifteenth prompt information in the first interface when it is detected that a system version corresponding to the terminal device does not meet a preset system version, both the fourteenth prompt information and the fifteenth prompt information being used to prompt the user to download a preset application, and the preset application being used to implement the wizard configuration of the router. In this way, the user can perform the wizard configuration of the router in the preset application according to guidance of the terminal device.

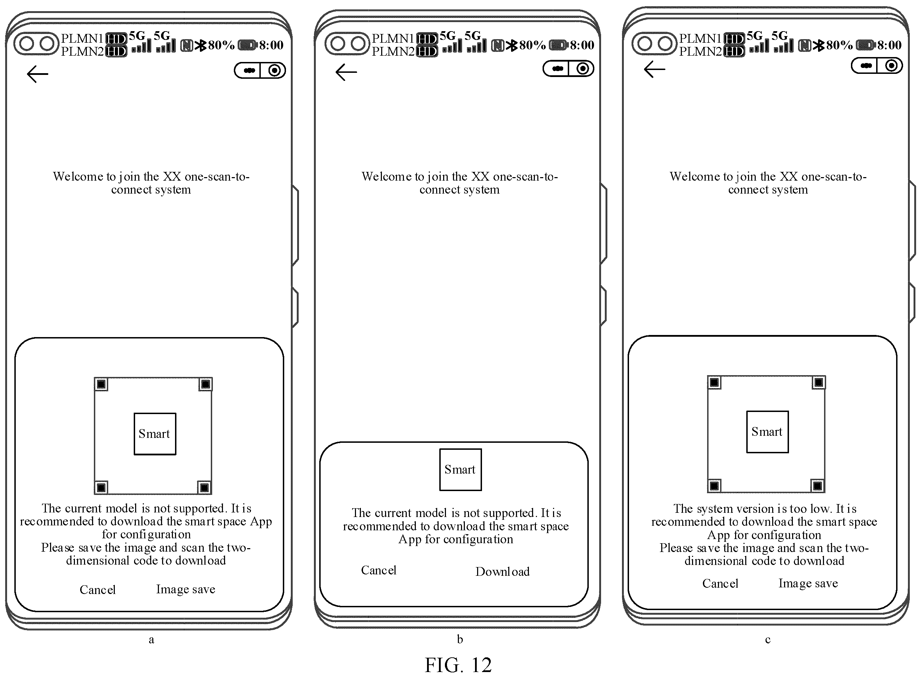

The fourteenth prompt information may be prompt information shown in a in FIG. 12 or b in FIG. 12 that is used to prompt that the one-scan-to-connect system does not support a current model and to prompt downloading a smart space APP. The fifteenth prompt information may be prompt information shown in c in FIG. 12 that is used to prompt that the system version is low and to prompt downloading the smart space APP.

The preset application may be the smart space APP described in this embodiment of this application.

According to a third aspect, an embodiment of this application provides a router connection apparatus, a communication unit in a router configured to establish a first WIFI connection with a terminal device based on a first WIFI SSID and a first WIFI password, the first WIFI SSID and the first WIFI password being determined based on attribute parameters of the router indicated in a target two-dimensional code, the target two-dimensional code being a two-dimensional code corresponding to the router; the communication unit in the router being further configured to transmit a second WIFI SSID and a second WIFI password to the terminal device based on the first WIFI connection; and the communication unit in the router being further configured to establish a second WIFI connection with the terminal device based on the second WIFI SSID and the second WIFI password.

In a possible implementation, the first WIFI connection is a local area network connection.

In a possible implementation, the communication unit in the router is further configured to receive a first data packet from the terminal device based on the second WIFI connection, the first data packet being a data packet accessing a network server through the router; and the communication unit in the router is further configured to transmit a second data packet to the terminal device, the second data packet being a response data packet generated when the network server receives the first data packet.

In a possible implementation, the communication unit in the router is further configured to turn off the first WIFI connection.

In a possible implementation, the communication unit in the router is further configured to establish the first WIFI connection with the terminal device based on the first WIFI SSID and the first WIFI password; the communication unit in the router is further configured to transmit attribute information of third WIFI to the terminal device based on the first WIFI connection, the attribute information of the third WIFI including: the third WIFI SSID and the third WIFI password; and the communication unit in the router is further configured to establish a third WIFI connection with the terminal device based on the attribute information of the third WIFI.

In a possible implementation, the attribute parameters of the router include a serial number SN of the router, and the first WIFI SSID and the first WIFI password are determined based on the SN of the router.

In a possible implementation, the communication unit in the router is further configured to receive a first request from the terminal device based on the first WIFI connection; and the communication unit in the router is further configured to transmit a first message to the terminal device, the first message including the second WIFI SSID and the second WIFI password, and the first message being a message generated by the router in response to the first request.

In a possible implementation, the communication unit in the router is further configured to receive a second request from the terminal device; and the communication unit in the router is further configured to transmit a second message to the terminal device, the second message including a symmetric key, the second message being a message generated by the router in response to the second request, and the first message being a message generated by the router by encrypting the second WIFI SSID and the second WIFI password with the symmetric key.

In a possible implementation, the first message further includes: information used to indicate whether wizard configuration of the router is completed, and the communication unit in the router is further configured to receive a fourth request from the terminal device when the information used to indicate whether wizard configuration of the router is completed indicates that the router does not complete the wizard configuration; and the communication unit in the router is further configured to transmit a fourth message to the terminal device, the fourth message being a message generated by the router in response to the fourth request, the fourth message including an Internet access manner of the router, the Internet access manner of the router including: a point-to-point protocol over Ethernet PPPOE or a dynamic host configuration protocol DHCP.

According to a fourth aspect, an embodiment of this application provides a router connection apparatus, including: a processing unit in a terminal device and a communication unit in the terminal device. The processing unit in the terminal device is configured to receive a first operation of scanning, by a user, a target two-dimensional code, the target two-dimensional code being a two-dimensional code corresponding to a router; the processing unit in the terminal device is further configured to acquire, in response to the first operation, a first WIFI SSID and a first WIFI password based on the target two-dimensional code, the first WIFI SSID and the first WIFI password being determined based on attribute parameters of the router; the communication unit in the terminal device is configured to establish a first WIFI connection with the router based on the first WIFI SSID and the first WIFI password; the communication unit in the terminal device is further configured to acquire a second WIFI SSID and a second WIFI password from the router based on the first WIFI connection; and the communication unit in the terminal device is further configured to establish a second WIFI connection with the router based on the second WIFI SSID and the second WIFI password.

In a possible implementation, the first WIFI connection is a local area network connection.

In a possible implementation, after the second WIFI connection is established, the communication unit in the terminal device is further configured to transmit a first data packet to the router based on the second WIFI connection, the first data packet being a data packet accessing a network server through the router; and the communication unit in the terminal device is further configured to receive a second data packet from the router, the second data packet being a response data packet generated when the network server receives the first data packet.

After the second WIFI connection is established, the communication unit in the terminal device is further configured to turn off the first WIFI connection.

In a possible implementation, the second WIFI SSID is changed to a third WIFI SSID, and/or the second WIFI password is changed to a third WIFI password, and the processing unit in the terminal device is further configured to receive a second operation of scanning, by the user, the target two-dimensional code; the processing unit in the terminal device is further configured to acquire, in response to the second operation, the first WIFI SSID and the first WIFI password based on the target two-dimensional code; the communication unit in the terminal device is further configured to establish the first WIFI connection with the router based on the first WIFI SSID and the first WIFI password; the communication unit in the terminal device is further configured to acquire attribute information of third WIFI from the router based on the first WIFI connection, the attribute information of the third WIFI including: the third WIFI SSID and the third WIFI password; and the communication unit in the terminal device is further configured to establish a third WIFI connection with the router based on the attribute information of the third WIFI.

In a possible implementation, the processing unit in the terminal device is further configured to receive a third operation of the user; and the communication unit in the terminal device is further configured to transmit the attribute information of the third WIFI to the router in response to the third operation, the attribute information of the third WIFI being obtained by adjusting attribute information of second WIFI based on the third operation, the attribute information of the second WIFI including: the second WIFI SSID and the second WIFI password.

In a possible implementation, the attribute parameters of the router include a serial number SN of the router, and the first WIFI SSID and the first WIFI password are determined based on the SN of the router.

In a possible implementation, the communication unit in the terminal device is specifically configured to transmit a first request to the router based on the first WIFI connection; and the communication unit in the terminal device is further specifically configured to receive a first message from the router, the first message including the second WIFI SSID and the second WIFI password, and the first message being a message generated by the router in response to the first request.

In a possible implementation, the communication unit in the terminal device is further configured to transmit a second request to the router; and the communication unit in the terminal device is further configured to receive a second message from the router, the second message including a symmetric key, the second message being a message generated by the router in response to the second request, and the first message being a message generated by the router by encrypting the second WIFI SSID and the second WIFI password with the symmetric key.

In a possible implementation, the processing unit in the terminal device is further configured to acquire a uniform resource locator URL from the target two-dimensional code; the communication unit in the terminal device is further configured to transmit a third request to a first server, the third request including the URL; and the communication unit in the terminal device is further configured to receive a third message from the first server, and a display unit in the terminal device is configured to display first prompt information in a first interface, the third message including at least one interface information corresponding to the URL, the at least one interface information including interface information corresponding to the first interface, the third message being a message generated by the server in response to the third request, and the first prompt information being used to prompt the terminal device to enter a scan-to-connect system.

In a possible implementation, the display unit in the terminal device is further configured to display second prompt information in a second interface, the second prompt information being used to prompt that the terminal device is synchronizing first information, the first information including: the second WIFI SSID and the second WIFI password.

In a possible implementation, the display unit in the terminal device is further configured to display third prompt information and fourth prompt information sequentially in the second interface, the third prompt information being used to prompt that the first information is synchronized successfully in the terminal device, and the fourth prompt information being used to prompt that the terminal device is connecting to WIFI of the router.

In a possible implementation, when the first information is not detected, the display unit in the terminal device is further configured to display fifth prompt information and sixth prompt information in the second interface, the fifth prompt information being used to prompt that the first information is unsuccessfully synchronized in the terminal device, and the sixth prompt information including at least one strategy used to reacquire the first information.

In a possible implementation, the display unit in the terminal device is further configured to display seventh prompt information in the second interface, the seventh prompt information being used to prompt that the terminal device is successfully connected to the router.

In a possible implementation, the first information may further include: information used to indicate whether wizard configuration of the router is completed, and the communication unit in the terminal device is further configured to transmit a fourth request to the router when the information used to indicate whether wizard configuration of the router is completed indicates that the router does not complete the wizard configuration; and the communication unit in the terminal device is further configured to receive a fourth message from the router, the fourth message being a message generated by the router in response to the fourth request, the fourth message including an Internet access manner of the router, the Internet access manner of the router including: a point-to-point protocol over Ethernet PPPOE or a dynamic host configuration protocol DHCP.

In a possible implementation, the display unit in the terminal device is further configured to display eighth prompt information in a third interface, the eighth prompt information being used to prompt that the terminal device is detecting an Internet access manner of the router.

In a possible implementation, the display unit in the terminal device is further configured to display a first control in the third interface, the first control being configured to indicate that the wizard configuration of the router is completed, and when the Internet access manner is the PPPOE, the third interface further including: a text box used to set a second WIFI SSID, a text box used to set a second WIFI password, a text box used to set a broadband account, and a text box used to set a broadband password, or when the Internet access manner is the DHCP, the third interface further including: a text box used to set a second WIFI SSID, and a text box used to set a second WIFI password.

In a possible implementation, the Internet access manner is the PPPOE, the wizard configuration of the router includes Internet access manner configuration corresponding to the PPPOE and WIFI configuration of the router, and the processing unit in the terminal device is further configured to receive the user's operation of entering a second WIFI SSID in the text box used to set the second WIFI SSID, entering a second WIFI password in the text box used to set the second WIFI password, entering a broadband account corresponding to the PPPOE in the text box used to set the broadband account, and entering a broadband password corresponding to the PPPOE in the text box used to set the broadband password, and receive the user's fourth operation on the first control; in response to the fourth operation, the communication unit in the terminal device is further configured to transmit a fifth message to the router, and the display unit in the terminal device is further configured to display ninth prompt information in the third interface, the fifth message including: the second WIFI SSID, the second WIFI password, the broadband account corresponding to the PPPOE, and the broadband password corresponding to the PPPOE, the ninth prompt information being used to prompt that the router is storing wizard configuration of the router corresponding to the fourth operation; and the display unit in the terminal device is further configured to display tenth prompt information in the third interface when the communication unit in the terminal device receives a sixth message from the router, the tenth prompt information being used to prompt that the wizard configuration of the router is successful, and the sixth message being a message generated when the router receives the fifth message and it is determined that the wizard configuration of the router is successful; or the display unit in the terminal device is further configured to display eleventh prompt information in the third interface when the communication unit in the terminal device receives a seventh message from the router, the eleventh prompt information being used to prompt that the wizard configuration of the router fails, and the seventh message being a message generated when the router receives the fifth message and it is determined that the wizard configuration of the router fails, where "the wizard configuration of the router fails" includes: Internet access manner configuration corresponding to the PPPOE, and/or WIFI configuration corresponding to the router.

In a possible implementation, the communication unit in the terminal device is further configured to transmit a fifth request to the router, and the display unit in the terminal device is further configured to display twelfth prompt information in the third interface, the fifth request being used to request restarting second WIFI of the router, and the twelfth prompt information being used to prompt that the router is restarting the second WIFI; and the communication unit in the terminal device is further configured to receive an eighth message from the router, the eighth message being a message generated by the router in response to the fifth request; and the display unit in the terminal device is further configured to display thirteenth prompt information in the third interface, the thirteenth prompt information being used to prompt that the terminal device is connecting to the second WIFI of the router.

In a possible implementation, the display unit in the terminal device is further configured to display fourteenth prompt information in the first interface when the processing unit in the terminal device detects that a model corresponding to the terminal device does not meet a preset model; and/or the display unit in the terminal device is further configured to display fifteenth prompt information in the first interface when the processing unit in the terminal device detects that a system version corresponding to the terminal device does not meet a preset system version, both the fourteenth prompt information and the fifteenth prompt information being used to prompt the user to download a preset application, and the preset application being used to implement the wizard configuration of the router.

According to a fifth aspect, this application provides a terminal device, the terminal device including a memory and one or more processors; where the memory is configured to store computer program code, the computer program code including computer instructions; and the computer instructions, when executed by the processor, cause the terminal device to perform the method according to the second aspect and any possible design manner thereof.

According to a sixth aspect, this application provides a router, the router including a memory and one or more processors; where the memory is configured to store computer program code, the computer program code including computer instructions; and the computer instructions, when executed by the processor, cause the router to perform the method according to the first aspect and any possible design manner thereof.

According to a seventh aspect, this application provides a computer-readable storage medium. The computer-readable storage medium includes computer instructions. The computer instructions, when run on a terminal device (such as a computer), cause the terminal device to perform the method according to the second aspect and any possible design manner thereof, or the computer instructions, when run on a router, cause the router to perform the method according to the first aspect and any possible design manner thereof.

According to an eighth aspect, this application provides a computer program product, where the computer program product, when run on a computer, causes the computer to perform the method according to the first aspect and any possible design manner thereof or the method according to the second aspect and any possible design manner thereof.

According to a ninth aspect, this application provides a chip system. The chip system includes one or more interface circuits and one or more processors. The interface circuit and the processor are interconnected by a line. The foregoing chip system may be applied to a terminal device including a communication module and a memory. The interface circuit is configured to receive a signal from the memory of the terminal device and transmit the received signal to the processor, where the signal includes computer instructions stored in the memory. When the processor executes the computer instructions, the terminal device may perform the method according to the second aspect and any possible design manner thereof.

It may be understood that for beneficial effects of the third aspect to the ninth aspect above, reference may be made to the related descriptions in the first aspect and the second aspect. Details are not described herein.

### BRIEF DESCRIPTION OF DRAWINGS

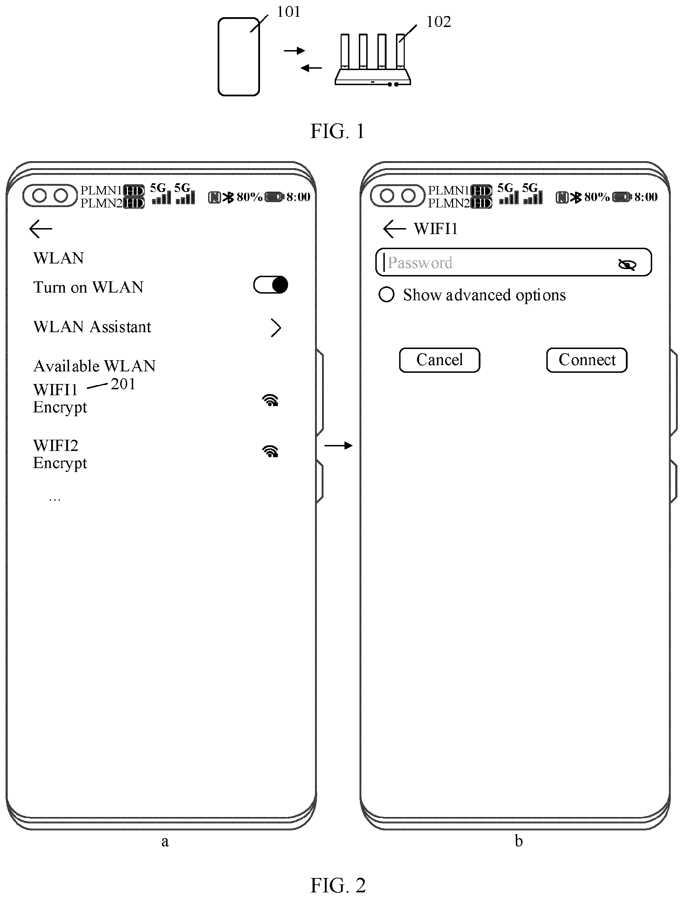

FIG. 1 is a schematic diagram of a scenario according to an embodiment of this application;
FIG. 2 is a schematic diagram of an interface for connecting to WIFI of a router;

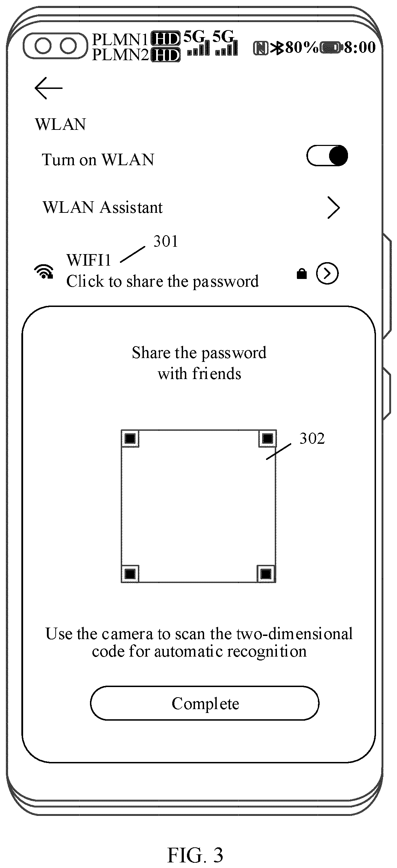

FIG. 3 is a schematic diagram of an interface for sharing a WIFI password;

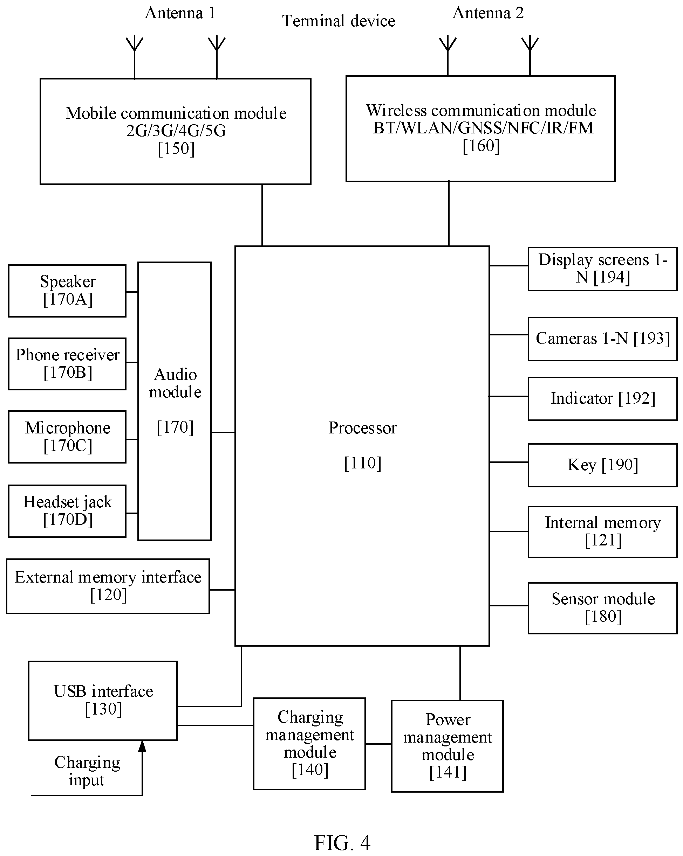

FIG. 4 is a schematic diagram of a hardware structure of a terminal device according to an embodiment of this application;
FIG. 5A to FIG. 5F are a schematic diagram of an interface for connecting to a router according to an embodiment of this application;
FIG. 6A to FIG. 6D are a schematic diagram I of an interface for router configuration according to an embodiment of this application;
FIG. 7A to FIG. 7D are a schematic diagram II of an interface for router configuration according to an embodiment of this application;
FIG. 8 is a schematic diagram I of another interface for router configuration according to an embodiment of this application;
FIG. 9A to FIG. 9D are a schematic diagram II of another interface for router configuration according to an embodiment of this application;
FIG. 10A to FIG. 10E are a schematic diagram of an interface in which routing information is not detected according to an embodiment of this application;

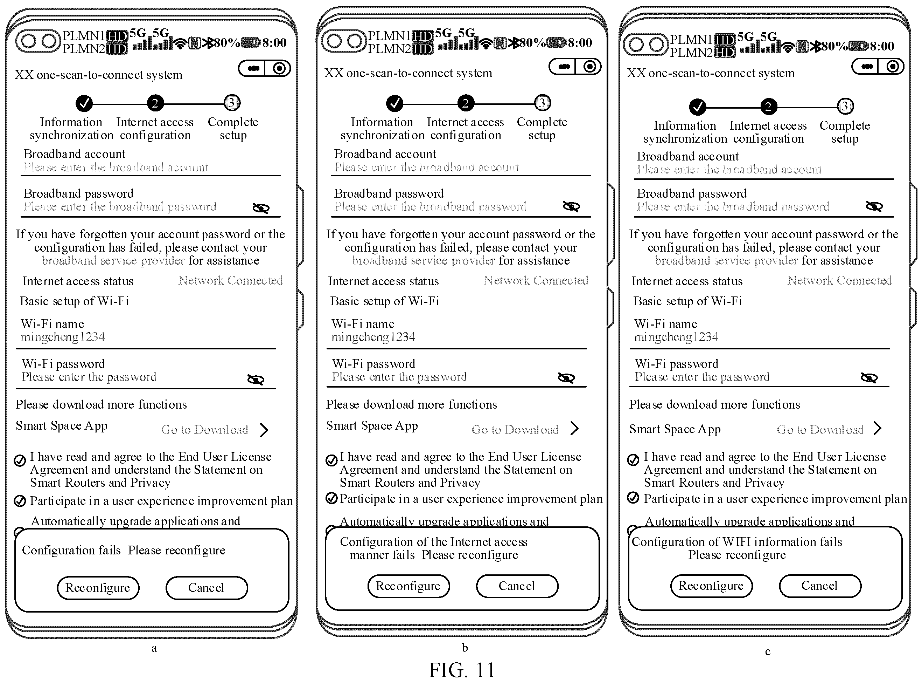

FIG. 11 is a schematic diagram of an interface for failure of router configuration according to an embodiment of this application;
FIG. 12 is a schematic diagram of an interface for prompting downloading a smart space APP according to an embodiment of this application;

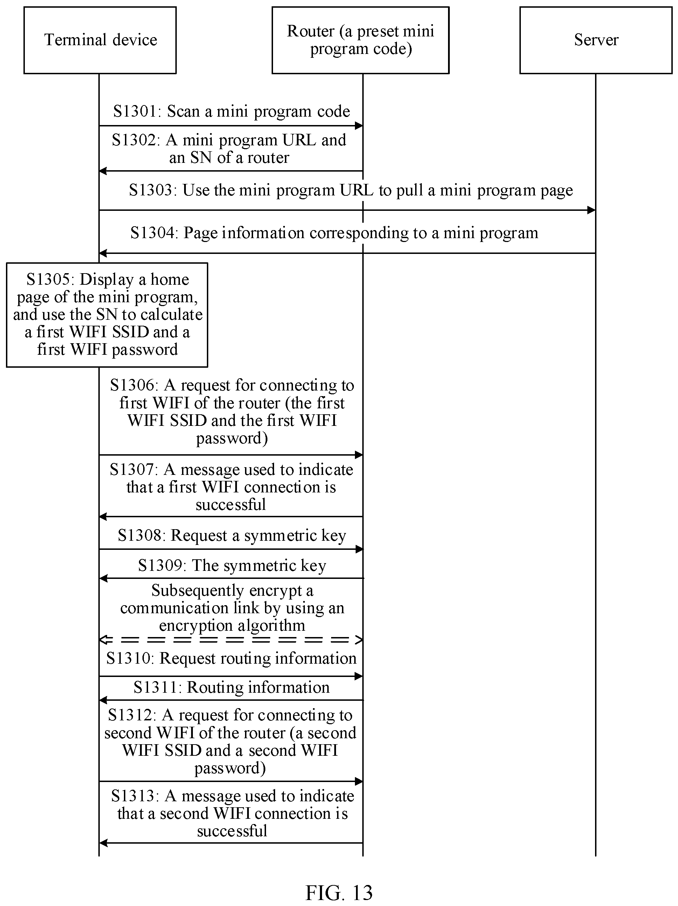

FIG. 13 is a schematic flowchart of a router connection method according to an embodiment of this application;

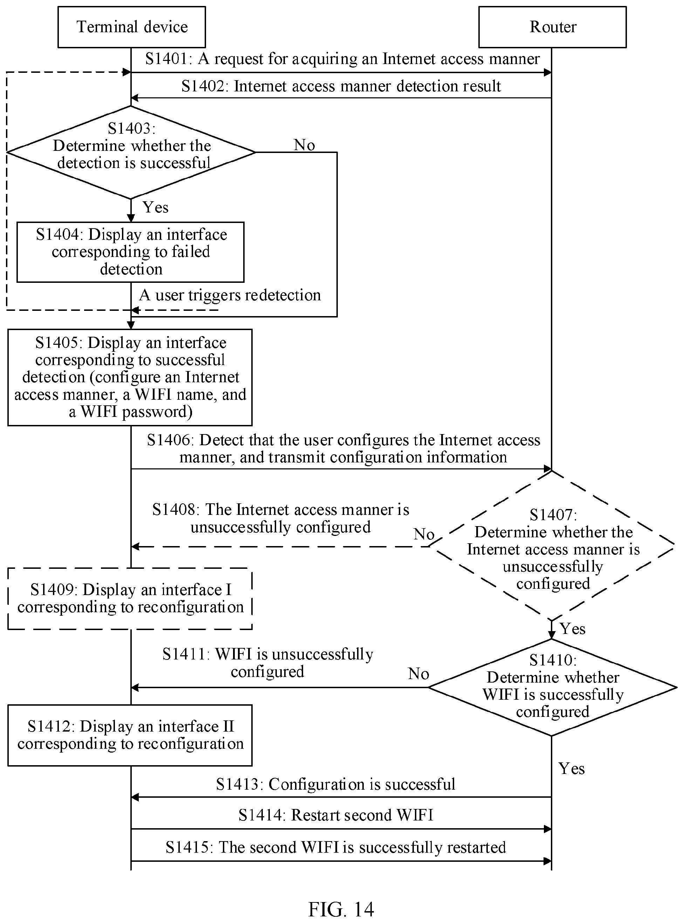

FIG. 14 is a schematic flowchart of a router parameter configuration method according to an embodiment of this application;

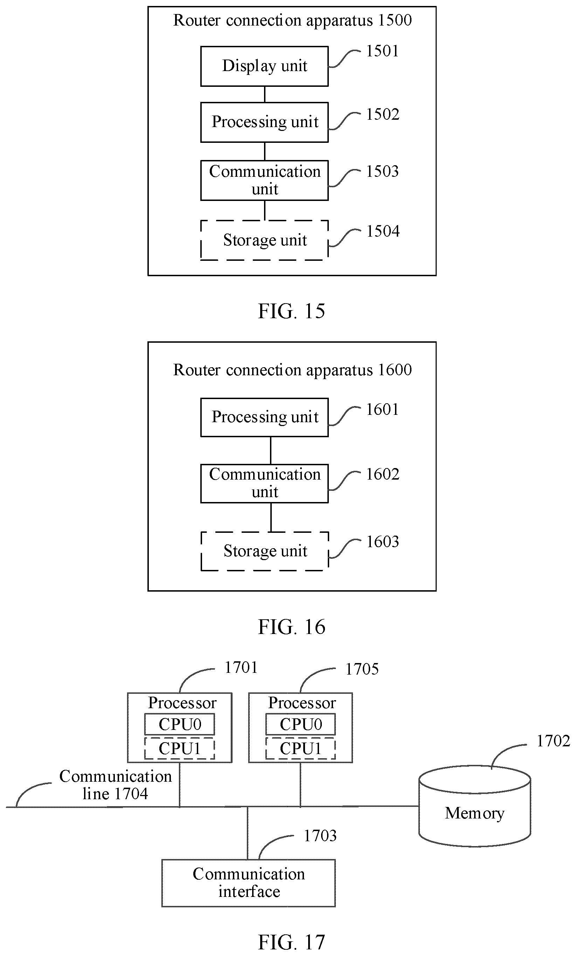

FIG. 15 is a schematic structural diagram I of a router connection apparatus according to an embodiment of this application;
FIG. 16 is a schematic structural diagram II of a router connection apparatus according to an embodiment of this application; and
FIG. 17 is a schematic diagram of a hardware structure of another device according to an embodiment of this application.

### DESCRIPTION OF EMBODIMENTS

To clearly describe the technical solutions in embodiments of this application, terms such as "first" and "second" are used in embodiments of this application to distinguish between same items or similar items that provide basically same functions or purposes. For example, a first value and a second value are merely used to distinguish between different preset values, and are not intended to limit a sequence thereof. A person skilled in the art may understand that the terms, such as "first" and "second", do not limit a quantity or an execution sequence, and the terms, such as "first" and "second", do not indicate a definite difference.

It should be noted that, in this application, the word such as "example" or "for example" is used to indicate giving an example, an illustration, or a description. Any embodiment or design scheme described as an "example" or "for example" in this application should not be explained as being more preferred or having more advantages than another embodiment or design scheme. Exactly, use of the term, such as "exemplary" or "for example", is intended to present a related concept in a specific manner.

In this application, "at least one" means one or more, and "plurality of" means two or more. The term "and/or" describes an association relationship between associated objects and indicates that three relationships may exist. For example, A and/or B may indicate the following three cases: only A exists, both A and B exist, and only B exists, where A and B may be singular or plural. The character "/" generally indicates an "or" relationship between the associated objects. "At least one of the following items (pieces)" or similar expressions indicate any combination of these items, including any combination of a singular item (piece) or plural items (pieces). For example, at least one of a, b, or c may represent: a, b, c, a and b, a and c, b and c, or a, b, and c, where a, b, and c may be singular or plural.

For ease of understanding embodiments of this application, some terms as referred to in this application are first briefly described.

### 1. Point to point protocol over Ethernet (point to point protocol over ethernet, PPPOE)-based Internet access

The PPPOE-based Internet access is a dial-up Internet access manner by using the PPPOE. Generally, after a broadband service is enabled, a service provider may provide a broadband account and a broadband password for a user using the PPPOE to access the Internet, and the user may enter the broadband account and the broadband password in the terminal device where routing is configured. After the broadband account and the broadband password are successfully verified, the terminal device may acquire an Internet Protocol (IP) address to access the Internet.

### 2. Dynamic host configuration protocol (dynamic host configuration protocol, DHCP)-based Internet access

The DHCP-based Internet access may be a manner of accessing the Internet by using the DHCP and based on a dynamic IP address assigned by a DHCP server. Generally, the terminal device may automatically acquire an IP address when needing to access the Internet, and access the Internet based on the acquired IP address.

A router connection method provided in this embodiment of this application is applicable to the PPPOE-based Internet access and/or the DHCP-based Internet access above. Based on the PPPOE-based Internet access and the DHCP-based Internet access, it may be understood that the DHCP-based Internet access does not require authentication, and the terminal device only needs to wait for the DHCP server to randomly assign an IP address from a plurality of IP addresses. However, the PPPOE-based Internet access requires authentication first. The terminal device can be assigned a valid IP address only when the broadband account and the broadband password are successfully verified.

Exemplarily, FIG. 1 is a schematic diagram of a scenario according to an embodiment of this application. As shown in FIG. 1, the scenario includes: a terminal device 101 and a router 102. The terminal device 101 may be a mobile phone.

Generally, after getting the router 102, the user may need to perform wizard configuration on the router 102 according to different Internet access manners. After the wizard configuration is completed, the terminal device may access a WIFI network by connecting to the router 102. For example, the terminal device 101 may enable a setting function based on a user operation, search for a WIFI signal when receiving that the user turns on a WIFI search button, establish a connection with the router 102 when receiving that the user triggers any WIFI and enters a password corresponding to the any WIFI, and realize wireless Internet access.

Specifically, FIG. 2 is a schematic diagram of an interface for connecting to WIFI of a router. When the terminal device searches for a network that may be connected to, an interface as shown in a in FIG. 2 may be displayed. The interface may include a control 201 corresponding to WIFI1 and a control corresponding to WIFI2. When the terminal device receives that the user triggers the control corresponding to any WIFI, for example, the user's trigger operation of triggering the control 201 corresponding to WIFI1, the terminal device may display an interface as shown in b in FIG. 2. For the interface as shown in b in FIG. 2, the interface may include a text box used to enter a password corresponding to WIFI1. The user may connect to WIFI1 by entering the password in the text box.

In the scenario corresponding to FIG. 2 above, the user needs to manage a WIFI password entered when connecting to the router. When the user does not know the WIFI password, the terminal device 101 may alternatively access WIFI of the router 102 based on the following two manners.

In an implementation, the terminal device 101 may be connected to the router 102 by triggering a preset key in the router 102. The preset key is used to realize a quick connection between the terminal device 101 and the router 102. For example, the terminal device 101 may search for the router 102 with the preset key and display a password setting interface based on a user operation. When the terminal device 101 receives an operation of setting a WIFI password of the router 102 by the user, the terminal device 101 may transmit the WIFI password to the router 102. Further, when the user triggers an identifier corresponding to the router 102 in an interface displayed by the terminal device 101 and moves the terminal device 101 close to the router 102, the router 102 may discover the terminal device 101, and then the user may trigger the preset key in the router 102 to cause the terminal device 101 to access the WIFI of the router 102.

In another implementation, when the user does not know the WIFI password, the terminal device 101 may alternatively acquire the WIFI password (e.g., an interface corresponding to FIG. 3) by scanning a two-dimensional code shared by another device that has been connected to the WIFI of the router 102, and then access the WIFI of the router 102 based on the user's operation of entering the WIFI password in the device.

FIG. 3 is a schematic diagram of an interface for sharing a WIFI password. FIG. 3 shows an interface displayed by a device that has been connected to the WIFI of the router 102. The interface may include one or more of the following: content such as a control 301 corresponding to WIFI1, a two-dimensional code 302 corresponding to WIFI1, and text information used to indicate sharing a WIFI password. The content displayed in the interface is not specifically limited in this embodiment of this application. Correspondingly, the terminal device 101 may acquire a password of WIFI1 by scanning the two-dimensional code 302, and access the WIFI of the router 102 when receiving that the user enters the password of WIFI1.

However, regardless of whether the user knows the WIFI password, the above steps for the terminal device to connect to the WIFI of the router are relatively cumbersome and affect the user's experience of using the WIFI function.

In view of this, an embodiment of this application provides a router connection method, in which the terminal device can first establish a local area network connection with the router by directly scanning a target two-dimensional code preset by the router, automatically acquire WIFI connection information capable of Internet access through the local area network connection, and then establish a WIFI connection capable of Internet access through the router. Therefore, WIFI can be automatically connected by only requiring the user to scan the target two-dimensional code preset by the router instead of requiring the user to actively enter information such as a WIFI password, which provides the user with a better connection experience.

A core of this solution is that the terminal device first establishes a local area network connection with the router through the first WIFI SSID and the first WIFI password parsed from the target two-dimensional code, to establish a preliminary connection with the router, after the connection is established, WIFI connection information capable of Internet access, for example, the second WIFI SSID and the second WIFI password, can be acquired from the router through a local area network, and then after the router is connected to by using the WIFI connection information capable of Internet access, the terminal device may be connected to the network server through the router to access the Internet.

The first WIFI SSID and the first WIFI password are parameters generated based on the attribute parameters of the router, and the second WIFI SSID and the second WIFI password are parameters used to connect to the router and access the Internet. In this solution, the local area network connection between the terminal device and the router may be established through the first WIFI, and the WIFI connection information capable of Internet access, for example, the second WIFI SSID and the second WIFI password, can be acquired when the local area network connection is established, to reduce trouble caused by the user remembering WIFI passwords.

In a possible implementation, when the user has not performed wizard configuration on the router, the terminal device may open a browser (or download an application (application, APP) provided by a router manufacturer) based on a user operation, and complete the wizard configuration of the router through operations of automatically acquiring an IP address, modifying a WIFI name, and setting a WIFI password by the user in a browser interface, or complete the wizard configuration of the router through operations of entering a broadband account and a broadband password, modifying the WIFI name, and setting the WIFI password by the user in the browser interface.

For a situation where parameter configuration of the router is relatively cumbersome, an embodiment of this application provides a router connection method, so that the terminal device may alternatively realize minimalist configuration of the router in a process of quickly connecting to the WIFI of the router by scanning a mini program code preset on the router.

The foregoing terminal device may also be referred to as a terminal (terminal), a user equipment (user equipment, UE), a mobile station (mobile station, MS), a mobile terminal (mobile terminal, MT), or the like. For example, the terminal device may be a mobile phone (mobile phone), an intelligent television, a wearable device, a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical care (remote medical), a wireless terminal in a smart grid (smart grid), a wireless terminal in transportation safety (transportation safety), a wireless terminal in a smart city (smart city), a wireless terminal in a smart home (smart home), or the like. A specific technology and a specific device form used by the terminal device are not limited in the embodiments of this application.

To better understand the embodiments of this application, a structure of the terminal device in the embodiments of this application is described below. Exemplarily, FIG. 4 is a schematic diagram of a hardware structure of a terminal device according to an embodiment of this application.

As shown in FIG. 4, the terminal device may include a processor 110, an external memory interface 120, an internal memory 121, a universal serial bus (universal serial bus, USB) interface 130, a charging management module 140, a power management module 141, an antenna 1, an antenna 2, a mobile communication module 150, a wireless communication module 160, an audio module 170, a speaker 170A, a phone receiver 170B, a microphone 170C, a headset jack 170D, a sensor module 180, a key 190, an indicator 192, a camera 193, a display screen 194, and the like.

The sensor module 180 may include one or more of the following, for example, a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure shown in the embodiments of this application does not constitute a specific limitation on the terminal device. In some other embodiments of this application, the terminal device may include more or fewer components than those shown in the figure, or combine some components, or split some components, or have different component arrangements. The components illustrated may be implemented by hardware, software, or a combination of software and hardware.

The processor 110 may include one or more processing units. Different processing units may be separate devices, or may be integrated to one or more processors. The processor 110 may be further provided with a memory configured to store instructions and data.

The USB interface 130 is an interface compliant with a USB standard specification, and may be specifically a Mini USB interface, a Micro USB interface, a USB Type C interface, or the like. The USB interface 130 may be configured to connect to a charger to charge the terminal device, or may be configured to perform data transmission between the terminal device and a peripheral device. The USB interface may alternatively be configured to connect to a headset to play audio through the headset. The interface may alternatively be configured to connect to another device such as an AR device.

The charging management module 140 is configured to receive charging input from the charger. The charger may be a wireless charger, or may be a wired charger. The power management module 141 is configured to connect to the charging management module 140 and the processor 110.

A wireless communication function of the terminal device may be implemented by using the antenna 1, the antenna 2, the mobile communication module 150, the wireless communication module 160, a baseband processor, and the like.

The antenna 1 and the antenna 2 are configured to transmit and receive electromagnetic wave signals. Each antenna in the terminal device may be configured to cover a single or a plurality of communication bands. Different antennas may be further multiplexed to increase a utilization rate of the antennas.

The mobile communication module 150 may provide a solution for wireless communication including 2G/3G/4G/5G that is applied to the terminal device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to a modem for demodulation.

The wireless communication module 160 may provide a solution for wireless communication applied to the terminal device, including a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), and the like.

The modem may include a modulator and a demodulator. The modulator is configured to modulate a to-be-transmitted low-frequency baseband signal into a medium or high-frequency signal. The demodulator is configured to demodulate the received electromagnetic wave signal into a low-frequency baseband signal. Then the demodulator transmits the low-frequency baseband signal obtained through demodulation to the baseband processor for processing. The low-frequency baseband signal is processed by the baseband processor and then transmitted to an application processor. The application processor outputs a sound signal through an audio device (which is not limited to the speaker, the phone receiver, and the like), or displays an image or a video through the display screen 194. In some embodiments, the modem may be a separate device. In some other embodiments, the modem may be independent of the processor 110 and may be disposed in a same device as the mobile communication module 150 or another functional module.

The terminal device implements a display function by using a GPU, the display screen 194, the application processor, and the like. The GPU is a microprocessor for image processing and is connected to the display screen 194 and the application processor. The GPU is configured to perform mathematical and geometric calculation, and is configured to perform graphics rendering.

The display screen 194 is configured to display an image, a video, or the like. The display screen 194 includes a display panel. In some embodiments, the terminal device may include 1 or N display screens 194, where N is a positive integer greater than 1.

The terminal device may implement a photographing function by using an ISP, the camera 193, a video codec, the GPU, the display screen 194, the application processor, and the like.

The camera 193 is configured to capture a still image or a video. In some embodiments, the terminal device may include 1 or N cameras 193, where N is a positive integer greater than 1.

The external memory interface 120 may be configured to connect to an external storage card such as a Micro SD card, to extend a storage capability of the terminal device. The external memory card communicates with the processor 110 through the external memory interface 120 to implement a data storage function, for example, store files such as music and a video in the external storage card.

The internal memory 121 may be configured to store computer-executable program code. The executable program code includes instructions. The internal memory 121 may include a program storage region and a data storage region.

The terminal device may implement an audio function through the audio module 170, the speaker 170A, the phone receiver 170B, the microphone 170C, the headset jack 170D, the application processor, and the like, such as music playback, recording, and the like.

The audio module 170 is configured to convert digital audio information into an analog audio signal for output, and is also configured to convert analog audio input into a digital audio signal. The speaker 170A, also referred to as a "horn", is configured to convert an electrical audio signal into a sound signal. Music may be listened to or a hands-free call may be answered by using the speaker 170A in the terminal device. The phone receiver 170B, also referred to as an "earpiece", is configured to convert an audio electrical signal into a sound signal. When a call is answered or voice information is listened to by using the terminal device, the phone receiver 170B may be put close to a human ear to listen to a voice. The headset jack 170D is configured to be connected to a wired headset. The microphone 170C, also referred to as a "mic" or a "mike", is configured to convert a sound signal into an electrical signal. In the embodiments of this application, the terminal device may be provided with a microphone 170C.

The key 190 includes an on/off key, a volume key, and the like. The key 190 may be a mechanical key, or may be a touch key. The terminal device may receive a key input, and generate a key signal input related to user setting and function control of the terminal device. The indicator 192 may be an indicator light, and may be configured to indicate a charging status or a power change, and may also be configured to indicate a message, a missed call, a notification, and the like.

In addition, an operating system further runs on the foregoing components, for example, an iOS operating system, an Android (android) operating system, or a Windows operating system. An application may be installed and run in the operating system.

A software system of the terminal device may use a hierarchical architecture, an event-driven architecture, a microcore architecture, a micro service architecture, or a cloud architecture, which are not described in detail herein again.

The following describes the technical solutions of this application and how to resolve the foregoing technical problems according to the technical solutions of this application in detail by using specific embodiments. The following several specific embodiments may be independently implemented, and may alternatively be combined with each other, and the same or similar concepts or processes may not be described repeatedly in some embodiments.

An embodiment of this application provide a router connection method, so that the terminal device may pull a mini program page by scanning a mini program code preset on a body of the router, and connect to WIFI of the router and configure the router based on a user operation on the mini program page. A mini program may be a mini program in a WeChat^{®} application. It may be understood that, in the embodiments of this application, a social attribute of the WeChat^{®} application and a convenience attribute of the mini program may be fully utilized, so that the terminal device may scan a mini program code associated with the router through WeChat^{®} to automatically and quickly connect to the WIFI of the router and perform minimalist configuration of the router, making it convenient for ordinary users to connect and configure the router with zero threshold.

For example, the terminal device may quickly connect to the WIFI of the router based on the embodiment corresponding to FIG. 5A to FIG. 5F when wizard configuration has been performed on the router. Alternatively, the terminal device may configure the router based on the embodiments corresponding to FIG. 6A to FIG. 6D to FIG. 7A to FIG. 7D (or FIG. 8 to FIG. 9A to FIG. 9D) when wizard configuration has not been performed on the router.

FIG. 6A to FIG. 6D to FIG. 7A to FIG. 7D may be examples of configuring the router for the DHCP-based Internet access manner. FIG. 8 to FIG. 9A to FIG. 9D may be examples of configuring the router for the PPPOE-based Internet access manner.

It may be understood that when the terminal device has not configured the router, a router configuration completion process may be as follows: The terminal device acquires routing information based on a one-scan-to-connect system (which may also be referred to as a scan-to-connect system) described in the embodiment corresponding to FIG. 5A to FIG. 5F. When determining from the routing information that wizard configuration has not been performed on the router, the terminal device may configure the router based on the embodiments corresponding to FIG. 6A to FIG. 6D to FIG. 7A to FIG. 7D (or FIG. 8 to FIG. 9A to FIG. 9D) and then connect to the WIFI of the router.

The routing information (or referred to as first information) may be understood as information stored in the router. The routing information may include one or more of the following: a second WIFI SSID, a second WIFI password, a gateway IP address corresponding to a bridge (bridge, br) br0, an Internet access status, information used to indicate whether wizard configuration of the router is completed, and the like.

Exemplarily, FIG. 5A to FIG. 5F are a schematic diagram of an interface for connecting to a router according to an embodiment of this application.

When the terminal device enables a scanning function of the WeChat^{®} application and points a camera in the terminal device at the mini program code on the body of the router, the terminal device may display an interface as shown in FIG. 5A. The interface may include: a mini program code.

When the terminal device scans the mini program code, the terminal device may pull a mini program page corresponding to the mini program code and display an interface as shown in FIG. 5B. The interface may be a home page of the mini program. The interface is used to indicate that the user has opened the mini program. The interface may include one or more of the following: prompt information used to prompt that the user is welcomed to join a XX one-scan-to-connect system, a control configured to exit the mini program, a control configured to forward the mini program, and the like.

The prompt information used to prompt that the user is welcomed to join a one-scan-to-connect system may be displayed as: Welcome to join a XX one-scan-to-connect system. "One-scan-to-connect" may be understood as scanning a mini program code to connect to the WIFI of the router.

The terminal device may automatically jump to an interface shown in FIG. 5C after staying in the interface shown in FIG. 5B for 2 s. For the interface as shown in FIG. 5C, the interface is used to indicate that the routing information is being synchronized. The interface may include one or more of the following: prompt information used to prompt that the routing information is being synchronized, a progress bar used to indicate a synchronization status of the routing information, illustration used to indicate that the terminal device and the router are synchronizing the routing information, and the like.

After the terminal device acquires the routing information from the router, the terminal device may switch from the interface shown in FIG. 5C to an interface shown in FIG. 5D. For the interface as shown in FIG. 5D, the interface is used to indicate that the terminal device acquires the routing information. The interface may include one or more of the following: an identifier 501 used to indicate that the terminal device is connected to the WIFI of the router, prompt information used to prompt that the routing information is successfully synchronized, a text identifier used to indicate that the terminal device and the router have completed information synchronization, a text identifier used to indicate connecting to the WIFI of the router in a second step, and illustration used to indicate that the terminal device and the router complete synchronization of the routing information.

The identifier 501 is used to indicate that the terminal device has been connected to first WIFI of the router. Specific description of the first WIFI may be obtained with reference to an embodiment corresponding to FIG. 13. In a possible implementation, the identifier 501 may alternatively be displayed in the interface as shown in FIG. 5C, or may be understood as that the terminal device has been connected to the first WIFI of the router during the synchronization of the routing information.

Generally, a duration during which the terminal device synchronizes the routing information may be 6 s or the like. That is, a duration during which the terminal device switches from the interface shown in FIG. 5C to the interface shown in FIG. 5D may be 6 s or the like.

Further, when the terminal device determines based on the routing information that wizard configuration has been performed on the router, the terminal device may switch from the interface shown in FIG. 5D to an interface shown in FIG. 5E. The interface shown in FIG. 5E is used to indicate that the terminal device is connecting to the WIFI of the router. For example, prompt information used to prompt that the WIFI of the router is being connected may be displayed in the interface. The terminal device may display an interface as shown in FIG. 5F after connecting to the WIFI of the router. The interface is used to indicate that the terminal device has been connected to the WIFI of the router. For example, prompt information used to prompt that the WIFI of the router has been connected to may be displayed in the interface. The WIFI of the router described in the interfaces shown in FIG. 5E to FIG. 5F may be second WIFI described in the embodiments of this application. Specific description of the second WIFI may be obtained with reference to an embodiment corresponding to FIG. 13.

Based on this, the user may confirm different stages during the connection to the WIFI of the router based on an interface displayed after the terminal device scans the mini program code, which simplifies a manner for the terminal device to connect to the WIFI of the router and enriching the user's experience of using a one-scan-to-connect function.

Exemplarily, FIG. 6A to FIG. 6D are a schematic diagram of an interface for router configuration according to an embodiment of this application.

In the interface shown in FIG. 5D, when the terminal device determines based on the routing information that the router has not been configured, the terminal device may display an interface as shown in FIG. 6A. The interface shown in FIG. 6A is used to indicate that the terminal device is detecting an Internet access environment. The interface shown in FIG. 6A includes: prompt information used to prompt that an Internet access manner of the router is being detected, a text identifier used to indicate that the terminal device has completed information synchronization with the router, a text identifier used to indicate that Internet access configuration is performed in a second step, and a text identifier used to indicate that setting is completed in a third step.

In the interface shown in FIG. 6A, the terminal device may display an interface as shown in FIG. 6B when detecting that the Internet access manner is the DHCP-based Internet access. In the interface as shown in FIG. 6B, the interface may be an interface used to configure the router for the DHCP-based Internet access manner. The interface may include one or more of the following, for example, an identifier used to indicate an Internet access status, a text box 601 used to set a WIFI name, a text box 602 used to set a WIFI password, a control configured to download a smart space APP (or referred to as a preset application), a control configured to agree to a privacy statement, a control configured to agree to participate in a user experience improvement plan, a control configured to agree to automatically upgrade mini programs, a configuration completion control 603, and the like.

Words "Network Connected" may be displayed around the identifier used to indicate the Internet access status. "I have read and agree to the End User License Agreement and understand the Statement on Smart Routers and Privacy" may be displayed around the control configured to agree to the privacy statement. The smart router is the router described in the embodiments of this application. Words "Go to Download" may be displayed around the control used to download the smart space APP. "Automatically upgrade applications and services of the device to provide a better user experience (3:00 to 5:00 am)" may be displayed around the control configured to agree to automatically upgrade mini programs.

A first WIFI service set identifier (service set identifier, SSID) may be displayed by default in the text box 601. No password may be displayed in the text box 602, in which only the words "Please enter the password" may be displayed to prompt the user to enter a second WIFI password. For example, mingcheng1234 may be displayed in the text box 601. Alternatively, the first WIFI SSID may not be displayed in the text box 601. In this scenario, words "Please enter the WIFI name" may be displayed in the text box 601 to prompt the user to enter a second WIFI SSID, which is not shown in the interface shown in FIG. 6B. The WIFI SSID is a name of a wireless signal transmitted by the router, which may also be called a WIFI name. The second WIFI SSID and the first WIFI SSID may be the same or different.

It may be understood that the terminal device may alternatively display a DHCP identifier in the interface shown in FIG. 6B. The DHCP identifier is used to indicate that the Internet access manner of the router is the DHCP. The user may use the DHCP identifier to identify that the DHCP-based Internet access manner is currently being configured.

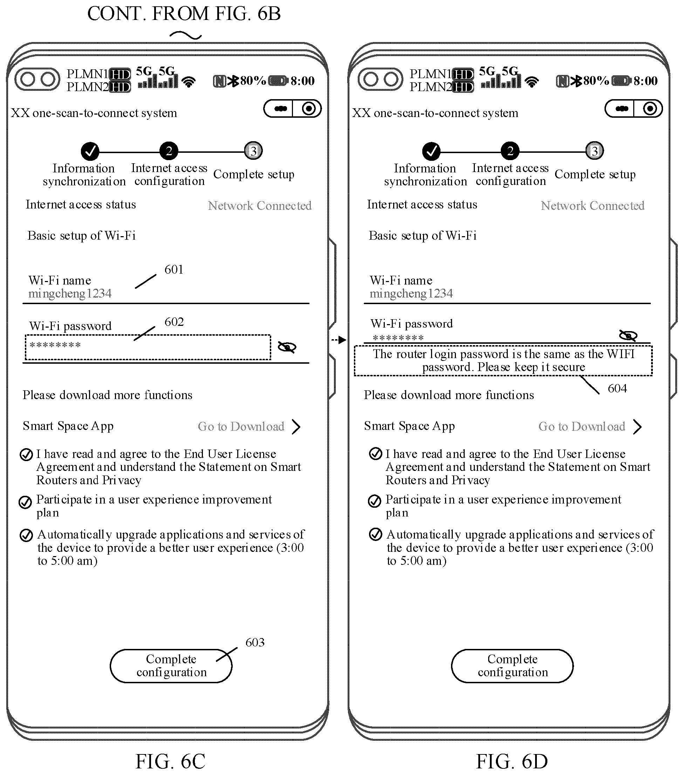

In the interface shown in FIG. 6B, when the terminal device receives the user's operation of entering the second WIFI SSID in the text box 601 and entering the second WIFI password in the text box 602, the terminal device may display an interface as shown in FIG. 6C. Other content displayed in the interface shown in FIG. 6C is similar to that in the interface shown in FIG. 6B, which is not described in detail herein again.

As can be seen from the interface as shown in FIG. 6C, the second WIFI password is invisible, so multiple *s may be displayed in the text box 602. When the terminal device receives the user's operation on the control configured to display the second WIFI password on the right side of the text box 602, the terminal device may display the entered second WIFI password in the text box 602.

In a possible implementation, when the terminal device receives the user's trigger operation on the configuration completion control 603 in the interface shown in FIG. 6C and the control configured to agree to the privacy statement in the interface shown in FIG. 6C is unselected, the terminal device may display a prompt box used to prompt the user to check the privacy statement. Text information "Please check the End User License Agreement and Smart Router and Privacy Statement" (not shown in the interface shown in FIG. 6C) may be displayed in the prompt box used to prompt the user to check the privacy statement.

In a possible implementation, when the terminal device detects that the first WIFI password is the same as the second WIFI password entered by the user, the terminal device may display prompt information 604 in the interface shown in FIG. 6D. The prompt information 604 is used to prompt the user that the second WIFI password is the same as the first WIFI password. The prompt information 604 may be displayed as "The router login password is the same as the WIFI password. Please keep it secure". The router password described in the prompt information 604 may be a default first WIFI password of the router. The WIFI password described in the prompt information 604 may be the second WIFI password described in the embodiments of this application. It may be understood that when the second WIFI password set by the user is the same as the default first WIFI password of the router, security of the WIFI connection may be affected, so the terminal device may initiate a prompt.

It may be understood that a dotted box displayed in any interface described in the embodiment corresponding to FIG. 6A to FIG. 6D is only used to indicate content displayed in the interface, and is not really displayed in the interface.

Further, FIG. 7A to FIG. 7D are a schematic diagram II of an interface for router configuration according to an embodiment of this application.

In the interface as shown in FIG. 6C, when the terminal device receives the user's trigger operation on the configuration completion control 603, the terminal device may display an interface as shown in FIG. 7A. The interface shown in FIG. 7A may include prompt information 701 used to prompt that the configuration in the interface shown in FIG. 6C is being saved. Further, the terminal device may sequentially display an interface shown in FIG. 7B and an interface shown in FIG. 7C, and display an interface shown in FIG. 7D after the WIFI of the router is successfully connected.

The WIFI described in the interface shown in FIG. 7B and the interface shown in FIG. 7C may be the second WIFI. The interface shown in FIG. 7B is used to indicate that the second WIFI is being restarted. For example, the interface shown in FIG. 7B includes: prompt information used to prompt restarting the WIFI. The interface shown in FIG. 7C is used to indicate that the second WIFI is being connected. The interface shown in FIG. 7C includes: prompt information used to prompt reconnecting to the WIFI. An interface shown in FIG. 7D is used to indicate that setup of the router has been completed. The interface shown in FIG. 7D includes one or more of the following: illustration of a XX router, prompt information used to prompt completion of router configuration, a control configured to download a smart space APP, and the like.

Based on this, the terminal device may automatically detect an Internet access manner of the router in a mini program, and implement setup of the router for any Internet access manner in the mini program, which simplifies a manner of setting up the router and improves the user's experience of using the one-scan-to-connect system.

Exemplarily, FIG. 8 is a schematic diagram I of another interface for router configuration according to an embodiment of this application.

In the interface shown in FIG. 5D, when the terminal device determines based on the routing information that wizard configuration has not been performed on the router, the terminal device may display an interface as shown in a in FIG. 8. The interface shown in a in FIG. 8 is similar to the interface shown in FIG. 6A, which is not described in detail herein again.

In the interface shown in a in FIG. 8, the terminal device may display an interface as shown in b in 8 when detecting that the Internet access manner is the PPPOE-based Internet access. In the interface as shown in b in FIG. 8, the interface may be an interface used to configure a router for the PPPOE-based Internet access manner. The interface may include one or more of the following, for example, a text box 801 used to indicate entering a broadband account, and a text box 802 used to indicate entering a broadband password. Other content displayed in the interface may be similar to the interface shown in FIG. 6B, which is not described in detail herein again.

Words "Please enter the broadband account" may be displayed in the text box 801 to prompt the user to enter a broadband account provided by the service provider when the user applies for the PPPOE-based Internet access. Words "Please enter the broadband password" may be displayed in the text box 802 to prompt the user to enter a broadband password provided by the service provider when the user applies for the PPPOE-based Internet access, and the PPPOE-based Internet access can be achieved only when the broadband account and the broadband password are correctly entered.

It may be understood that the terminal device may alternatively display a PPPOE identifier in the interface shown in b in FIG. 8. The PPPOE identifier is used to indicate that the Internet access manner of the router is the PPPOE. The user may use the PPPOE identifier to identify that the PPPOE-based Internet access manner is currently being configured.

In the interface as shown in b in FIG. 8, when the terminal device receives the user's operation of entering the broadband account in the text box 801, entering the broadband password in the text box 802, entering the second WIFI SSID in the text box 803, and entering the second WIFI password in the text box 804, the terminal device may display an interface as shown in c in FIG. 8. In the interface as shown in c in FIG. 8, "abc123" may be displayed in the text box 801. The password in the text box 802 is invisible. Therefore, multiple *s may be displayed in the text box 802. Other content displayed in the interface may be obtained with reference to the interface shown in FIG. 6C, which is not described in detail herein again.

Further, FIG. 9A to FIG. 9D are a schematic diagram II of another interface for router configuration according to an embodiment of this application.

In the interface as shown in c in FIG. 8, when the terminal device receives the user's trigger operation on the configuration completion control 805, the terminal device may display an interface as shown in FIG. 9A. The interface shown in FIG. 9A may include prompt information used to prompt that the configuration in the interface shown in c in FIG. 8 is being saved. Further, the terminal device may sequentially display an interface shown in FIG. 9B and an interface shown in FIG. 9C, and display an interface shown in FIG. 9D after the WIFI of the router is successfully connected. The prompt information in the interface shown in FIG. 9A to the interface shown in FIG. 9D may be obtained with reference to the description in the interface shown in FIG. 7A to the interface shown in FIG. 7D, which is not described in detail herein again.

It may be understood that the terminal device may complete router configuration for the PPPOE-based Internet access manner based on the embodiments corresponding to FIG. 8 to FIG. 9A to FIG. 9D. After the router receives the broadband account and the broadband password and confirms that the broadband account and the broadband password are successfully verified, an IP address acquired from a network side may be returned to the terminal device to realize a subsequent Internet access function of the terminal device.

Based on this, the terminal device may automatically detect an Internet access manner of the router in a mini program, and implement setup of the router for any Internet access manner in the mini program, which simplifies a manner of setting up the router and improves the user's experience of using the one-scan-to-connect system.

Based on the embodiment corresponding to FIG. 5A to FIG. 5F, when the terminal device does not detect the routing information, the terminal device may prompt the user to re-acquire the routing information based on the embodiment corresponding to FIG. 10A to FIG. 10E.

Exemplarily, FIG. 10A to FIG. 10E are a schematic diagram of an interface in which routing information is not detected according to an embodiment of this application.

In the interface as shown in FIG. 5C, when the terminal device does not detect routing information from the router, the terminal device may display an interface shown in FIG. 10A. For the interface as shown in FIG. 10A, the interface may include one or more of the following: illustration used to indicate that a line between an optical modem (or a home network port) and the router is abnormal, prompt information used to prompt failure of router configuration, prompt information used to prompt the user to adjust the line, a redetection control 1001, a control configured to download the smart space APP, and the like. The prompt information used to prompt the user to adjust the line may be displayed as "1. Please ensure that the router has been connected to the optical modem or the home network port. 2. Please make sure the network cable is securely plugged in, or try using a different network cable. 3. After the above is confirmed, click to redetect. If the connection still cannot be established, please contact the broadband service provider for assistance". The "broadband service provider" in the prompt information is a triggerable control 1002.

In the interface as shown in FIG. 10A, when the terminal device receives the user's trigger operation on the redetection control 1001, the terminal device may resynchronize the routing information and display the interface as shown in FIG. 10B. For the interface as shown in FIG. 10B, the interface may include: prompt information used to prompt that the routing information is being resynchronized. The prompt information may be displayed as "The routing information is unsuccessfully synchronized. The routing information is being resynchronized ...".

In the interface as shown in FIG. 10B, when the terminal device detects that the routing information is unsuccessfully resynchronized, the terminal device may display an interface as shown in FIG. 10C. For the interface as shown in FIG. 10C, the interface is used to prompt the user that the routing information is unsuccessfully synchronized and prompt the user to download the smart space APP for configuration. The interface may include one or more of the following: text information used to indicate that the routing information is unsuccessfully synchronized, illustration used to indicate that the routing information between the terminal device and the router is unsuccessfully synchronized, a control configured to download the smart space APP, and the like.

In a possible implementation, the terminal device may alternatively display the interface as shown in FIG. 10C when detecting that a quantity of times the routing information is unsuccessfully synchronized is greater than a preset quantity-of-times threshold, such as 2 or 3. Exemplarily, when the quantity-of-times threshold is 2, the terminal device may continuously display the interface as shown in FIG. 10C when detecting that the quantity of times the routing information is unsuccessfully synchronized is 2, and continuously display the interface as shown in FIG. 10C when detecting that the quantity of times the routing information is unsuccessfully synchronized is 3, which is not limited in this embodiment of this application.

It may be understood that when the terminal device detects that the routing information is unsuccessfully synchronized multiple times, the terminal device may display the interface as shown in FIG. 10C, to prompt the user to perform routing configuration in the smart space APP. The smart space APP is an APP that can realize router configuration. The smart space APP is not affected by factors such as mini programs, system versions, and device models, and may provide a capability of configuring routers for various types of terminal devices.

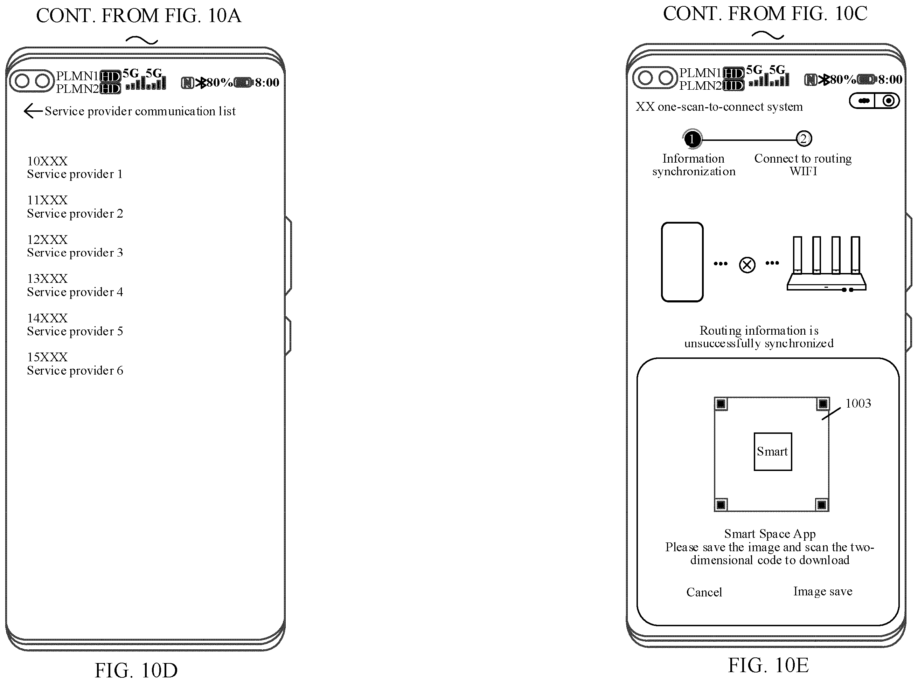

In a possible implementation, in the interface as shown in FIG. 10A, when the terminal device receives the user's trigger operation on the triggerable control 1002, the terminal device may display an interface as shown in FIG. 10D. For the interface as shown in FIG. 10D, the interface may display a service provider communication list. The service provider communication list may include: a number of at least one service provider and a name of the service provider.

In the interface as shown in FIG. 10C, when the terminal device receives a trigger operation on the control configured to download the smart space APP, the terminal device may display an interface as shown in FIG. 10E. The interface may include one or more of the following: text information used to prompt the user to download the smart space APP, a two-dimensional code 1003 corresponding to the smart space APP, a cancel control, an image save control, and the like. The text information used to prompt the user to download the smart space APP may be displayed as "The smart space APP. Please save the image and scan the two-dimensional code to download." Therefore, the terminal device may save an image of the two-dimensional code 1003 and scan the two-dimensional code 1003 to download the smart space APP to continue router configuration.

In a possible implementation, based on the interface shown in FIG. 6A or the interface shown in a in FIG. 8, when the terminal device determines that the Internet access manner is not detected, the terminal device may alternatively display the interface as shown in FIG. 10A, so that the user can acquire the Internet access manner by redetection in the interface shown in FIG. 10A.

Based on this, when the terminal device does not detect the routing information or the Internet access manner, the terminal device may display prompting the user to perform redetection, so that the user can re-acquire the routing information or the Internet access manner according to a requirement, to improve the user's experience of using the one-scan-to-connect system.

Based on the embodiment corresponding to FIG. 6A to FIG. 6D or FIG. 8, when the terminal device detects failure of router configuration, the terminal device may prompt the user to re-perform the router configuration based on the embodiment corresponding to FIG. 11.

Exemplarily, FIG. 11 is a schematic diagram of an interface for failure of router configuration according to an embodiment of this application. In the embodiment corresponding to FIG. 11, description is based on an example in which the PPPOE-based Internet access manner is configured. The example does not constitute a limitation on this embodiment of this application. A process of failure of configuration of a PPPOE router may include one or more of the following: failure of configuration of the Internet access manner (or understood as failure of configuration of the broadband account and the broadband password), and failure of configuration of WIFI.

The terminal device may display an interface as shown in a in FIG. 11 when detecting failure of configuration of the Internet access manner or failure of configuration of WIFI. Alternatively, the terminal device may display an interface as shown in b in FIG. 11 when detecting failure of configuration of the Internet access manner and display an interface as shown in c in FIG. 11 when detecting failure of configuration of WIFI.

In an implementation, in the interface as shown in c in FIG. 8, when the terminal device receives the user's trigger operation on the configuration completion control 805 and determines failure of configuration of the Internet access manner or failure of configuration of WIFI based on the router, the terminal device may display the interface as shown in a in FIG. 11. The interface shown in a in FIG. 11 includes: prompt information used to prompt failure of routing configuration. Alternatively, in the interface as shown in c in FIG. 8, when the terminal device receives the user's trigger operation on the configuration completion control 805 and determines failure of configuration of the Internet access manner or failure of configuration of WIFI based on the router, the terminal device may display the interface shown in FIG. 9A and then jump to the interface shown in a in FIG. 11.

In another implementation, in the interface as shown in c in FIG. 8, when the terminal device receives the user's trigger operation on the configuration completion control 805 and determines failure of configuration of the Internet access manner based on the router, the terminal device may display the interface as shown in b in FIG. 11. The interface shown in b in FIG. 11 include: prompt information used to prompt failure of configuration of the Internet access manner. Alternatively, in the interface as shown in c in FIG. 8, when the terminal device receives the user's trigger operation on the configuration completion control 805 and determines failure of configuration of the Internet access manner or failure of configuration of WIFI based on the router, the terminal device may display the interface shown in FIG. 9A and then jump to the interface shown in b in FIG. 11.

In yet another implementation, in the interface as shown in c in FIG. 8, when the terminal device receives the user's trigger operation on the configuration completion control 805 and determines failure of configuration of WIFI based on the router, the terminal device may display the interface as shown in c in FIG. 11. The interface shown in c in FIG. 11 includes: prompt information used to prompt failure of configuration of WIFI. Alternatively, in the interface as shown in c in FIG. 8, when the terminal device receives the user's trigger operation on the configuration completion control 805 and determines failure of configuration of the Internet access manner or failure of configuration of WIFI based on the router, the terminal device may display the interface shown in FIG. 9A and then jump to the interface shown in c in FIG. 11.

It may be understood that when the Internet access manner is the DHCP, the terminal device may display the prompt information in the interface as shown in a in FIG. 11 or the prompt information in the interface as shown in c in FIG. 11 when detecting failure of configuration of WIFI.

Specific reasons for the failure of configuration described in the embodiment corresponding to FIG. 11 may be obtained with reference to the steps shown in S1407 and S1410 in the embodiment corresponding to FIG. 14, which are not described in detail herein again.

Based on this, the terminal device may display the same prompt information or different prompt information when detecting failure of configuration of the Internet access manner or failure of configuration of WIFI, to prompt the user to modify the router configuration and improve accuracy of the connection between the terminal device and the router.

On the basis of the embodiment corresponding to FIG. 5A to FIG. 5F, when the terminal device detects that the current device does not support router setup, the terminal device may prompt the user to download the smart space APP for router setup.

Exemplarily, FIG. 12 is a schematic diagram of an interface for prompting downloading a smart space APP according to an embodiment of this application.

In an implementation, the terminal device may prompt the user to download the smart space APP for router setup when detecting that the current device does not meet a preset model. For example, a model of at least one terminal device that allows the use of the one-scan-to-connect system may be preset in the terminal device, and after the terminal device scans the mini program code, it may be detected whether the device is the preset model. For example, when the terminal device determines that the current model is not the preset model, the terminal device may display an interface as shown in a in FIG. 12 or an interface as shown in b in FIG. 12. The interface shown in a in FIG. 12 or the interface shown in b in FIG. 12 includes prompt information that may be used to prompt that the one-scan-to-connect system does not support the current model and prompt downloading the smart space APP.

In the interface as shown in a in FIG. 12, when the terminal device receives the user's operation of triggering the image save control, the terminal device may save a two-dimensional code image. Further, when receiving the user's scan of the two-dimensional code in a preset application, the terminal device may jump to an application store or a browser to download the smart space APP.

In the interface as shown in b in FIG. 12, when the terminal device receives the user's operation of triggering a download control, the terminal device may jump to the application store or the browser to download the smart space APP. A specific manner of downloading the smart space APP is not specifically limited in this embodiment of this application.

In another implementation, the terminal device may prompt the user to download the smart space APP for router setup when detecting that the current device does not meet a preset system version number. For example, a system version number of at least one terminal device that allows the use of the one-scan-to-connect system may be preset in the terminal device, and after the terminal device scans a mini program code, it may be detected whether the system version number corresponding to the device is the preset system version number. For example, when the terminal device determines that a current system version number is not the preset system version number, the terminal device may display an interface as shown in c in FIG. 12. In the interface as shown in c in FIG. 12, the interface may include prompt information used to prompt that the system version is low and to prompt downloading the smart space APP.

Based on this, the terminal device may scan the mini program code to detect whether the current device supports router setup in the one-scan-to-connect system, and give a prompt when determining that the current device does not support router setup in the one-scan-to-connect system, so that the user may use the smart space APP for router setup.

It may be understood that the interfaces described in the embodiments corresponding to FIG. 5A to FIG. 5F to FIG. 12 are only used as examples and do not constitute a limitation on the router connection method provided in the embodiments of this application.

Based on the description in the embodiments corresponding to FIG. 5A to FIG. 5F to FIG. 12, an embodiment of this application provides a router connection method, so that the terminal device may be quickly connect to WIFI of the router by scanning a preset mini program code in the router.

Exemplarily, FIG. 13 is a schematic flowchart of a router connection method according to an embodiment of this application. As shown in FIG. 13, the router connection method may include the following steps:
S1301: A terminal device receives a user' operation of scanning a mini program code.

The mini program code may be affixed to the router's body or may be affixed to a manual corresponding to the router or another position, which is not limited in this embodiment of this application.

The mini program code may be generated by a mini program uniform resource locator (URL) and attribute parameters of the router. The attribute parameters of the router may include: a serial number (SN) of the router and other parameters used to uniquely indicate the router.

It may be understood that, since the SN of the router is unique, the mini program code is also unique. That is, one router may correspond to one mini program code. WIFI carried by the mini program code may be non-hidden. That is, the user may search for WIFI corresponding to the router through the terminal device. If WIFI carried by the mini program is hidden, the terminal device cannot be successfully connected to the WIFI of the router.

S1302: The terminal device acquires a mini program URL and an SN of a router from the mini program code.

For example, the terminal device may acquire the mini program URL and the SN of the router by scanning the mini program code, which are saved in the terminal device.

S1303: The terminal device pulls a mini program page from a server by using the mini program URL.

For example, the terminal device may transmit a request for acquiring the mini program page to the server. The request for acquiring the mini program page may include the mini program URL.

The server (or referred to as a first server) described in S1303 may be understood as a WeChat^{®} application public platform, which is used to provide various mini program pages for the WeChat^{®} application in the terminal device. For example, the terminal device may transmit the request for acquiring the mini program page to the server, and the server may acquire page information corresponding to the mini program URL and return the page information corresponding to the mini program to the terminal device, so that the terminal device may pull the mini program page from the server according to the mini program URL parsed in the mini program code.

S1304: The server may return page information corresponding to a mini program to the terminal device.

The page information corresponding to the mini program may include: page information corresponding to any interface in the mini program described in this embodiment of this application, for example, page information corresponding to a home page of the mini program. The home page of the mini program may be the interface shown in FIG. 5B.

Exemplarily, the terminal device may receive the page information corresponding to the mini program and then perform operations such as rendering the page information, so that the terminal device can display different interface content in the mini program.

S1305: The terminal device displays a home page of the mini program and uses the SN to calculate a first WIFI SSID and a first WIFI password.

First WIFI may be initial WIFI of the router or called fixed WIFI. The first WIFI SSID and the first WIFI password are both obtained based on SN parsing, so the first WIFI SSID and the first WIFI password are also unique.

It may be understood that the first WIFI SSID and the first WIFI password are determined based on the attribute parameters of the router, such as the SN of the router. Therefore, the first WIFI SSID and the first WIFI password are not allowed to be modified by the user at will.

S1306: The terminal device transmits, to the router, a request for connecting to first WIFI of the router.

The request for connecting to the first WIFI of the router may include: the first WIFI SSID and the first WIFI password.

S1307: The router returns, to the terminal device, a message used to indicate that a first WIFI connection is successful.

It may be understood that since the first WIFI SSID and the first WIFI password are fixed, the terminal device may use the first WIFI to access the router to realize local area network communication between the terminal device and the router. In this scenario, the first WIFI SSID and the first WIFI may serve as a bridge to realize data interaction between the terminal device and the router.

After the first WIFI connection is successful, the terminal device may transmit, to the router, a request for acquiring an IP address, and a bridge in the router, such as br2, may assign a first IP address to the terminal device connected to the first WIFI of the router. Further, when the terminal device transmits a message to the router based on the first IP address and a gateway IP address corresponding to br2, br2 may forward the message. Further, a forward level in a data link layer firewall may intercept the message reported by br2 to prevent the terminal device from accessing the Internet through the first WIFI connection. It may be understood that the first WIFI is only used to realize local area network communication between the terminal device and the router, and cannot realize an Internet access function. The gateway IP address corresponding to br2 may be set by default in the mini program of the terminal device.

For example, based on the first WIFI connection, the terminal device and the router may realize exchange of symmetric keys in S1308 to S1309 and exchange of routing information in S1310 to S1311.

S1308: The terminal device transmits, to the router, a request for acquiring a symmetric key.

The request for acquiring the symmetric key may include: the SN of the router and signature information. The signature information is information obtained after the terminal device uses a private key to sign the SN of the router.

A private key of an RSA asymmetric encryption algorithm filled with 1024-bit public key cryptography standards (public key cryptography standards, PKCS) #8 may be preset in the mini program of the terminal device. A public key of the RSA asymmetric encryption algorithm filled with 1024-bit PKCS #8 may be preset in a routing plug-in process of the router.

S1309: The router returns the symmetric key to the terminal device.

Correspondingly, after the router receives the SN of the router and the signature information that are in the request for acquiring the symmetric key, the router may use the public key to decrypt the signature information and compare consistency between decrypted information and the SN of the router. After signature verification is successful, the router may determine that the request for acquiring the symmetric key is a message transmitted by the mini program in the terminal device, and then return the generated symmetric key to the terminal device. The symmetric key may be a 16-bit advanced encryption standard (advanced encryption standard, AES) symmetric encryption key.

Based on the steps shown in S1308 to S1309, a communication link between the terminal device and the router may be subsequently encrypted based on the symmetric key, to ensure security of data transmission. For example, the router may use the symmetric key to encrypt the routing information and return encrypted information to the terminal device through the steps shown in S1311, and correspondingly, the terminal device may decrypt the message received in S1311.

S1310: The terminal device transmits, to the router, a request for acquiring routing information.

The routing information (or referred to as first information) may be information acquired from the router. The routing information may include one or more of the following: a second WIFI SSID, a second WIFI password, a gateway IP address corresponding to br0, an Internet access status, information used to indicate whether wizard configuration of the router is completed, and the like.

Second WIFI may be understood as WIFI of the router used to implement an Internet access function. The second WIFI SSID and/or the second WIFI password may be set by default in the router, or may be set by the user in the embodiment corresponding to FIG. 6A to FIG. 6D or FIG. 8, which is not limited in this embodiment of this application.

The Internet access status may include: statuses such as network connected and network disconnected.

The wizard configuration of the router may be understood as configuring the Internet access manner of the router. For a router wizard configuration process, please refer to the description in the embodiments corresponding to FIG. 6A to FIG. 6Dto FIG. 7A to FIG. 7D (or the embodiments corresponding to FIG. 8 to FIG. 9A to FIG. 9D).

Exemplarily, the terminal device may display the interface as shown in FIG. 5C after transmitting, to the router, the request for acquiring routing information.

S1311: The router returns the routing information to the terminal device.

Correspondingly, after the terminal device receives the routing information returned by the router, the terminal device may display the interface as shown in FIG. 5D. Further, the terminal device may use the second WIFI SSID and the second WIFI password in the routing information to connect to the second WIFI of the router, for example, perform the step shown in S1312.

In a possible implementation, when the terminal device determines, based on the information in the routing information used to indicate whether the wizard configuration of the router is completed, that the user has performed wizard configuration, the terminal device may connect to the router WIFI based on the second WIFI SSID and the second WIFI password, for example, perform the step shown in S1312.

Alternatively, when the terminal device determines, based on the information in the routing information used to indicate whether the wizard configuration of the router is completed, that the user has not performed wizard configuration, the terminal device may detect the Internet access manner of the router and display the interface as shown in FIG. 6A or the interface as shown in a in FIG. 8.

It may be understood that even if the information indicating whether the wizard configuration of the router is completed indicates that the user has not performed wizard configuration on the router, the routing information may also include a default second WIFI SSID of the router and a default second WIFI password of the router. The default second WIFI SSID of the router and the default second WIFI password of the router are stored in the router when the router leaves the factory and are allowed to be modified by the user.

In a possible implementation, when the terminal device does not receive the routing information returned by the router within a period of time threshold during which the request for acquiring the routing information is transmitted, the terminal device may display the interface as shown in FIG. 10A. Further, when the terminal device detects the user's triggering operation on the redetection control 1001, the terminal device may re-perform the steps shown in S1310 to S1311 to redetect the routing information.

S1312: The terminal device transmits, to the router, a request for connecting to the second WIFI of the router.

The request for connecting to the second WIFI of the router may include: the second WIFI SSID and the second WIFI password.

S1313: The router returns, to the terminal device, a message used to indicate that a second WIFI connection is successful.

Correspondingly, when the terminal device receives a message used to indicate that the second WIFI connection is successful, it may be determined that a second device has been successfully connected to the WIFI of the router.

After the second WIFI connection is successful, the terminal device may transmit, to the router, a request for acquiring an IP address, and br0 in the router may assign a second IP address to the terminal device connected to the second WIFI of the router. When the terminal device transmits a message to the router based on the second IP address and the gateway IP address corresponding to br0, br0 may forward the message. Further, the forward level in the data link layer firewall may forward the message reported by br0 and forward the message to a network server, and the network server may respond to the message and return a generated response message to the terminal device through the router, so that the terminal device accesses the Internet through the second WIFI connection.

Exemplarily, based on the second WIFI connection, the terminal device transmits a first data packet to the router, and the router may transmit the first data packet to the network server. Correspondingly, the network server may respond to the received first data packet, and generate a second data packet corresponding to the first data packet, and then a network data packet may return the second data packet to the terminal device through the router, so that the terminal device can access the Internet through the second WIFI connection. It may be understood that the first data packet is a data packet accessing the network server through the router, and the second data packet is a response data packet generated when the network server receives the first data packet.

In a possible implementation, the terminal device may turn off the first WIFI connection after establishing the second WIFI connection. For example, the terminal device transmits, to the router, a request for turning off the first WIFI connection, and the router returns, to the terminal device, a message indicating that the first WIFI is successfully turned off. In this way, when the second WIFI connection is established, the terminal device and the router can reduce resource consumption by turning off the first WIFI connection.

In a possible implementation, device information brought when the terminal device connects to the second WIFI may alternatively be stored in the router, and when the terminal device connects to the first WIFI of the router again by scanning the mini program code, the router may determine, according to the device information of the terminal device, that the terminal device has been connected to the router. Therefore, the router may directly return the routing information to the terminal device, so that after connecting to the first WIFI of the router, the terminal device can be connected to the second WIFI of the router without acquiring the routing information, which simplifies the method for the terminal device to connect to the router.

Based on the description in the embodiment corresponding to FIG. 13, the terminal device can first establish a local area network connection with the router by directly scanning the target two-dimensional code preset by the router, automatically acquire WIFI connection information capable of Internet access through the local area network connection, and then establish a WIFI connection capable of Internet access through the router. Therefore, WIFI can be automatically connected by only requiring the user to scan the target two-dimensional code preset by the router instead of requiring the user to actively enter information such as a WIFI password, which provides the user with a better connection experience.

On the basis of the embodiment corresponding to FIG. 13, when the second WIFI SSID and/or the second WIFI SSID change/changes, the terminal device may alternatively establish a local area network connection with the first WIFI of the router by scanning the mini program code, acquire a third WIFI SSID and a third WIFI password from the router in the case of the local area network connection, and use the third WIFI SSID and the third WIFI password to establish a connection with the router.

The third WIFI SSID is different from the second WIFI SSID, and/or the third WIFI password is different from the second WIFI password. A process of establishing a connection between the terminal device and the router through the third WIFI SSID and the third WIFI password may be obtained with reference to the embodiment corresponding to FIG. 13, which is not described in detail herein again.

It may be understood that when at least one parameter in the second WIFI SSID and the second WIFI password is modified, the terminal device may establish a local area network connection with the first WIFI of the router by scanning the mini program code, and if the first WIFI connection is successful, acquire the third WIFI SSID and the third WIFI password required for reconnection from the router.

In this way, an advantage of using the first WIFI SSID and the first WIFI password to realize local area network communication between the terminal device and the router is that no matter how the second WIFI SSID and/or the second WIFI password change/changes, the terminal device may use the fixed first WIFI to realize the local area network connection and acquire, on the basis of the local area network connection, WIFI connection information capable of Internet access from the router, to achieve a purpose of accessing the router even if the WIFI password is modified.

It may be understood that compared with a general case where WIFI SSIDs and WIFI passwords of the router are stored in a cloud, in the router connection method described in this embodiment of this application, the WIFI SSIDs and the WIFI passwords do not need to be acquired from the cloud, saving resource consumption.

On the basis of the embodiment corresponding to FIG. 13, a router connection method provided in this embodiment of this application may also realize setup of the Internet access manner and/or the WIFI in the router.

Exemplarily, FIG. 14 is a schematic flowchart of a router parameter configuration method according to an embodiment of this application.

S1401: A terminal device transmits, to a router, a request for acquiring an Internet access manner.

Exemplarily, when the terminal device determines, based on the information in the routing information acquired in S1311 and used to indicate whether the wizard configuration of the router is completed, that wizard configuration has not been performed on the router, the terminal device may display the interface as shown in FIG. 6A or the interface as shown in a in FIG. 8 and perform the step shown in S1401 to transmit, to the router, the request for acquiring the Internet access manner.

S1402: The router returns an Internet access manner detection result to the terminal device.

The Internet access manner detection result may include: DHCP-based Internet access, PPPOE-based Internet access, and detection of no Internet access manner.

S1403: The terminal device determines whether the detection is successful.

When the terminal device detects the Internet access manner, the terminal device may perform the step shown in S1404. Alternatively, when the terminal device does not detect the Internet access manner, the terminal device may perform the step shown in S1405.

S1404: The terminal device displays an interface corresponding to failed detection.

The interface corresponding to failed detection may be the interface shown in FIG. 10A.

In a possible implementation, when the terminal device receives the user's triggering operation on the redetection control in the interface shown in FIG. 10A, the terminal device may perform the step shown in S1401 to redetect the Internet access manner.

It may be understood that the failure to detect the Internet access manner may be due to an unsuccessful connection of a line between the optical modem (or the home network port) and the router. Therefore, the user may review the connection of the line based on the prompt information displayed in the interface shown in FIG. 10A.

S1405: The terminal device displays an interface corresponding to successful detection.

When the detection result is DHCP-based Internet access, the interface corresponding to successful detection may be the interface shown in FIG. 6B. Alternatively, when the detection result is PPPOE-based Internet access, the interface corresponding to successful detection may be the interface shown in b in FIG. 8.

S 1406: The terminal device detects that a user configures the Internet access manner and transmits a message including configuration information to the router.

The configuration information may include: WIFI configuration information, and/or configuration information corresponding to the Internet access manner. The configuration information may be understood as information entered by the user in the embodiment corresponding to FIG. 6A to FIG. 6D (or FIG. 8).

The WIFI configuration information may include: the second WIFI SSID and the second WIFI password. When the Internet access manner is the PPPOE-based Internet access, the configuration information corresponding to the Internet access manner may include: a broadband account and a broadband password. Alternatively, when the Internet access manner is the DHCP, configuration information corresponding to the DHCP-based Internet access may not be included in the configuration information.

In a possible implementation, since the DHCP-based Internet access does not need setup of the Internet access manner such as a broadband account and a broadband password, the router may not confirm whether the DHCP-based Internet access manner is successfully configured. For example, when the router determines that the Internet access manner is the DHCP-based Internet access, the terminal device may perform the steps shown in S 1410 to S 1413 to determine setup of WIFI. Alternatively, when the router determines that the Internet access manner is the PPPOE-based Internet access, the terminal device may perform the steps shown in S1407 to S1409 to verify a broadband account and a broadband password inputted by the terminal device based on the PPPOE-based Internet access manner and then perform the steps shown in S1410 to S1413 to determine setup of WIFI.

Exemplarily, the terminal device may configure the Internet access manner in the embodiments corresponding to FIG. 6A to FIG. 6D to FIG. 7A to FIG. 7D (or FIG. 8 to FIG. 9A to FIG. 9D) based on a user operation, and after completion of the configuration, the terminal device may transmit configuration information to the router when the terminal device receives the user's trigger operation on the configuration completion control.

It may be understood that the terminal device may display the interface as shown in FIG. 7A or the interface as shown in FIG. 9A after transmitting the configuration information to the router.

S1407: The router determines whether the Internet access manner is successfully configured.

When the router determines that the Internet access manner is successfully configured, the router may perform the steps shown in S1410 to S1413. Alternatively, when the router determines that the Internet access manner is unsuccessfully configured, the router may perform the steps shown in S1408 to S1409.

Exemplarily, the router may determine, according to the broadband account and the broadband password entered by the user in the interface shown in FIG. 6B (or b in FIG. 8), whether the Internet access manner is successfully configured. For example, the router may verify the broadband account and the broadband password entered by the user, and when determining that the broadband account entered by the user is the same as a broadband account provided by the service provider and the broadband password entered by the user is the same as a broadband password provided by the service provider, the router may determine that the Internet access manner is successfully configured. Alternatively, when determining that the broadband account entered by the user is different from the broadband account provided by the service provider and the broadband password entered by the user is different from the broadband password provided by the service provider, the router may determine that the Internet access manner is unsuccessfully configured and perform the step shown in S1408.

S1408: The router returns, to the terminal device, a message used to indicate that the Internet access manner is unsuccessfully configured.

S1409: The terminal device displays an interface I corresponding to reconfiguration.

The interface I corresponding to reconfiguration may be the interface shown in a in FIG. 11 or the interface shown in b in FIG. 11.

S1410: The router determines whether WIFI is successfully configured.

When the router determines that WIFI is successfully configured, the router may perform the step shown in S1413. Alternatively, when the router determines that WIFI is unsuccessfully configured, the router may perform the steps shown in S1411 to S1412.

Exemplarily, the router may determine, according to the second WIFI SSID entered by the user and the second WIFI password entered by the user in the interface shown in FIG. 6B (or b in FIG. 8), whether the Internet access manner is successfully configured. For example, the router may verify the second WIFI SSID entered by the user and the second WIFI password entered by the user, and when determining that the second WIFI SSID entered by the user is different from the default second WIFI SSID of the router and the second WIFI password entered by the user is different from the default second WIFI password of the router, the router may determine that the Internet access manner is successfully configured. Alternatively, when determining that the second WIFI SSID entered by the user is the same as the default second WIFI SSID of the router and/or the second WIFI password entered by the user is the same as the default second WIFI password of the router, the router may determine that the Internet access manner is unsuccessfully configured.

In a possible implementation, the terminal device may alternatively determine whether WIFI is successfully configured. That is, the terminal device may receive the routing information returned by the router based on the step shown in S1311, and acquire the default second WIFI SSID of the router and the default second WIFI password of the router from the router, thereby determining, in the terminal device, whether the WIFI is successfully configured.

S1411: The router returns, to the terminal device, a message used to indicate that WIFI is unsuccessfully configured.

S1412: The terminal device displays an interface II corresponding to reconfiguration.

The interface II corresponding to reconfiguration may be the interface shown in a in FIG. 11 or the interface shown in c in FIG. 11.

It may be understood that the interface I and the interface II may be the same or different, which is not limited in this embodiment of this application.

S1413: The router returns, to the terminal device, a message used to indicate successful configuration.

S1414: The terminal device transmits, to the router, a request for indicating restarting second WIFI.

Exemplarily, the terminal device may perform the step shown in S1414 when receiving the message used to indicate successful configuration and returned by the router in S1413.

The terminal device may display the interface as shown in FIG. 7B (or FIG. 9B) after transmitting, to the router, the request for indicating restarting the second WIFI. In this way, after the router restarts second WIFI configuration, the terminal device may use the second WIFI SSID and the second WIFI password configured by the user to establish a connection with the second WIFI of the router.

S1415: The router returns, to the terminal device, a message used to indicate that the second WIFI is successfully restarted.

Further, when the terminal device receives the message used to indicate successful configuration and returned by the router, the terminal device may perform the steps shown in S1312 to S1313 based on the second WIFI SSID and the second WIFI password that are set, be reconnected to the second WIFI of the router, and display the interface as shown in FIG. 7C or shown in FIG. 9C.

Based on this, the terminal device can not only realize one-scan-to-connect, but also configure the router in the one-scan-to-connect, to simplify the method for the user to configure the router and facilitate ordinary users to configure the router with zero threshold.

It should be noted that, the user information (including, but not limited to, user equipment information, user personal information, and the like) and data (including, but not limited to, data for analysis, stored data, displayed data, and the like) involved in this application all are information and data authorized by the user or fully authorized by each party. The collection, use, and processing of relevant data need to comply with relevant laws and regulations, and corresponding operation portals are provided for the user to choose to authorize or refuse.

The method provided in the embodiments of this application is described above with reference to FIG. 5A to FIG. 5F to FIG. 14, and an apparatus performing the foregoing method and provided in the embodiments of this application is described below. As shown in FIG. 15, FIG. 15 is a schematic structural diagram I of a router connection apparatus according to an embodiment of this application. The router connection apparatus may be a terminal device in the embodiments of this application, or may be a chip or a chip system in the terminal device.

As shown in FIG. 15, a router connection apparatus 1500 may be used in a communication device, a circuit, a hardware component, or a chip. The router connection apparatus includes: a display unit 1501, a processing unit 1502, and a communication unit 1503. The display unit 1501 is configured to support the router connection apparatus 1500 in performing a display step. The processing unit 1502 is configured to support the router connection apparatus 1500 to perform a step of information processing. The communication unit is configured to support the router connection apparatus 1500 to perform a step of transmitting data and receiving data. The communication unit 1503 may be an input/output interface, a pin, a circuit, or the like.

In a possible embodiment, the router connection apparatus may further include: a storage unit 1504. The processing unit 1502 is connected to the storage unit 1504 through a line. The storage unit 1504 may include one or more memories. The memory may be a component in one or more devices or circuits that is configured to store a program or data. The storage unit 1504 may exist independently, and is connected to the processing unit 1502 included in the router connection apparatus by using a communication line. The storage unit 1504 may alternatively be integrated with the processing unit 1502.

The storage unit 1504 may store computer-executable instructions of the method of the terminal device, so that the processing unit 1502 performs the method in the foregoing embodiments. The storage unit 1504 may be a register, a cache, a RAM, or the like, and the storage unit 1504 may be integrated with the processing unit 1502. The storage unit 1504 may be a read-only memory (read-only memory, ROM) or another type of static storage device that may store static information and instructions, and the storage unit 1504 may be independent of the processing unit 1502.

FIG. 16 is a schematic structural diagram II of a router connection apparatus according to an embodiment of this application. The router connection apparatus may be the router in the embodiments of this application, or may be a chip or a chip system in the router.

As shown in FIG. 16, a router connection apparatus 1600 may be used in a communication device, a circuit, a hardware component, or a chip. The router connection apparatus includes: a processing unit 1601 and a communication unit 1602. The processing unit 1601 is configured to support the router connection apparatus 1600 to perform a step of information processing. The communication unit is configured to support the router connection apparatus 1600 to perform a step of transmitting data and receiving data. The communication unit 1602 may be an input/output interface, a pin, a circuit, or the like.

In a possible embodiment, the router connection apparatus may further include: a storage unit 1603. The processing unit 1601 is connected to the storage unit 1603 through a bus. The storage unit 1603 may include one or more memories. The memory may be a component in one or more devices or circuits that is configured to store a program or data. The storage unit 1603 may exist independently, and is connected to the processing unit 1601 included in the router connection apparatus by using a communication line. The storage unit 1603 may alternatively be integrated with the processing unit 1601.

The storage unit 1603 may store computer-executable instructions for the method in the router, so that the processing unit 1601 performs the method in the foregoing embodiments. The storage unit 1603 may be a register, a cache, a RAM, or the like, and the storage unit 1603 may be integrated with the processing unit 1601. The storage unit 1603 may be a read-only memory (read-only memory, ROM) or another type of static storage device that may store static information and instructions, and the storage unit 1603 may be independent of the processing unit 1601.

FIG. 17 is a schematic diagram of a hardware structure of another device according to an embodiment of this application. For example, the device described in the embodiment corresponding to FIG. 17 may be a terminal device or a router device.

As shown in FIG. 6A to FIG. 6D, the device may include a processor 1701, a communication line 1704, and at least one communication interface (for example, a communication interface 1703 is used as an example for description in FIG. 17).

The processor 1701 may be a general-purpose central processing unit (central processing unit, CPU), a microprocessor, an application-specific integrated circuit (application-specific integrated circuit, ASIC), or one or more integrated circuits configured to control execution of a program in the solutions of this application.

The communication line 1704 may include a circuit configured to transmit information between the foregoing components.

The communication interface 1703 uses any apparatus of a transceiver type to communicate with another device or a communication network such as an Ethernet, wireless local area networks (wireless local area networks, WLAN), and the like.

Possibly, the device may further include a memory 1702.

The memory 1702 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM) or a compact disc read-only memory (compact disc read-only memory, CD-ROM) or another compact disc storage, optical disc storage (including compressed optical discs, laser discs, optical discs, digital versatile optical discs, and Blu-ray discs), magnetic disk storage media, or another magnetic storage device, or any another medium that can be used to carry or store desired program code in the form of an instruction or a data structure and that can be accessed by a computer, but not limited thereto. The memory may exist independently, and be connected to the processor by using the communication line 1704. The memory may alternatively be integrated with the processor.

The memory 1702 is configured to store computer-executable instructions for performing the solutions of this application, and is controlled and executed by the processor 1701. The processor 1701 is configured to execute the computer executable instructions stored in the memory 1702 to implement the method provided in the embodiments of this application.

Possibly, the computer executable instructions in this embodiment of this application may also be referred to as application code. This is not specifically limited in this embodiment of this application.

In a specific implementation, in an embodiment, the processor 1701 may include one or more CPUs, for example, a CPU0 and a CPU1 in FIG. 17.

In a specific implementation, in an embodiment, the device may include a plurality of processors, for example, the processor 1701 and a processor 1705 in FIG. 17. Each of these processors may be a single-core (single-CPU) processor, or may be a multi-core (multi-CPU) processor. The processor herein may be one or more devices or circuits, and/or a processing core configured to process data (for example, computer program instructions).

The computer program product includes one or more computer instructions. When computer program instructions are loaded and executed on a computer, all or some of procedures or functions according to embodiments of this application are generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer, or a data storage device including a server, a data center, or the like that integrates one or more usable media. For example, the usable medium may include a magnetic medium (for example, a floppy disk, a hard disk, or a magnetic tape), an optical medium (for example, a digital versatile disc (digital versatile disc, DVD)), a semiconductor medium (for example, a solid-state drive (solid state disk, SSD)), or the like.

An embodiment of this application further provides a computer-readable storage medium. The method described in the foregoing embodiments may be wholly or partially implemented by software, hardware, firmware, or any combination thereof. The computer-readable medium may include a computer storage medium and a communication medium, and may further include any medium that may transfer a computer program from one place to another. The storage medium may be any target medium accessible to a computer.

In a possible design, the computer-readable storage medium may include a compact disc read-only memory (compact disc read-only memory, CD-ROM), a RAM, a ROM, an EEPROM, or another optical disc memory. The computer-readable medium may include a magnetic disk memory or another magnetic disk storage device. Moreover, any connection line may also be appropriately referred to as a computer-readable medium. For example, if software is transmitted from a website, a server or another remote source by using a coaxial cable, an optical fiber cable, a twisted pair, a DSL or wireless technologies (such as infrared ray, radio, and microwave), the coaxial cable, optical fiber cable, twisted pair, DSL or wireless technologies such as infrared, radio, and microwave are included in the definition of the medium. A magnetic disk and an optical disc as used herein include a compact disc (CD), a laser disc, an optical disc, a digital versatile disc (digital versatile disc, DVD), a floppy disk, and a blue ray disc. The magnetic disk generally reproduces data in a magnetic manner, and the optical disc reproduces data optically by using laser.

The foregoing combination should also be included in the scope of the computer-readable medium. The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A router connection method, applied to a router, the method comprising:
establishing a first WIFI connection with a terminal device based on a first WIFI SSID and a first WIFI password, the first WIFI SSID and the first WIFI password being determined based on attribute parameters of the router indicated in a target two-dimensional code, the target two-dimensional code being a two-dimensional code corresponding to the router;
transmitting a second WIFI SSID and a second WIFI password to the terminal device based on the first WIFI connection; and
establishing a second WIFI connection with the terminal device based on the second WIFI SSID and the second WIFI password.

2. The method according to claim 1, wherein the first WIFI connection is a local area network connection.

3. The method according to claim 1 or 2, wherein after the establishing a second WIFI connection, the method further comprises:
receiving a first data packet from the terminal device based on the second WIFI connection, the first data packet being a data packet accessing a network server through the router; and
transmitting a second data packet to the terminal device, the second data packet being a response data packet generated when the network server receives the first data packet.

4. The method according to any one of claims 1 to 3, wherein after the establishing a second WIFI connection, the method further comprises:
turning off the first WIFI connection.

5. The method according to any one of claims 1 to 4, wherein the second WIFI SSID is changed to a third WIFI SSID, and/or the second WIFI password is changed to a third WIFI password, and the method further comprises:
establishing the first WIFI connection with the terminal device based on the first WIFI SSID and the first WIFI password;
transmitting attribute information of third WIFI to the terminal device based on the first WIFI connection, the attribute information of the third WIFI comprising: the third WIFI SSID and the third WIFI password; and
establishing a third WIFI connection with the terminal device based on the attribute information of the third WIFI.

6. The method according to any one of claims 1 to 5, wherein the attribute parameters of the router comprise a serial number SN of the router, and the first WIFI SSID and the first WIFI password are determined based on the SN of the router.

7. The method according to any one of claims 1 to 6, wherein the transmitting a second WIFI SSID and a second WIFI password to the terminal device based on the first WIFI connection comprises:
receiving a first request from the terminal device based on the first WIFI connection; and
transmitting a first message to the terminal device, the first message comprising the second WIFI SSID and the second WIFI password, and the first message being a message generated by the router in response to the first request.

8. The method according to claim 7, wherein before the receiving a first request from the terminal device, the method further comprises:
receiving a second request from the terminal device; and
transmitting a second message to the terminal device, the second message comprising a symmetric key, the second message being a message generated by the router in response to the second request, and the first message being a message generated by the router by encrypting the second WIFI SSID and the second WIFI password with the symmetric key.

9. The method according to claim 7 or 8, wherein the first message further comprises: information used to indicate whether wizard configuration of the router is completed, and the method further comprises:
receiving a fourth request from the terminal device when the information used to indicate whether wizard configuration of the router is completed indicates that the router does not complete the wizard configuration; and
transmitting a fourth message to the terminal device, the fourth message being a message generated by the router in response to the fourth request, the fourth message comprising an Internet access manner of the router, the Internet access manner of the router comprising: a point-to-point protocol over Ethernet PPPOE or a dynamic host configuration protocol DHCP.

10. A router connection method, applied to a terminal device, the method comprising:
receiving a first operation of scanning, by a user, a target two-dimensional code, the target two-dimensional code being a two-dimensional code corresponding to the router;
acquiring, in response to the first operation, a first WIFI SSID and a first WIFI password based on the target two-dimensional code, the first WIFI SSID and the first WIFI password being determined based on attribute parameters of the router;
establishing a first WIFI connection with the router based on the first WIFI SSID and the first WIFI password;
acquiring a second WIFI SSID and a second WIFI password from the router based on the first WIFI connection; and
establishing a second WIFI connection with the router based on the second WIFI SSID and the second WIFI password.

11. The method according to claim 10, wherein the first WIFI connection is a local area network connection.

12. The method according to claim 10 or 11, wherein after the establishing a second WIFI connection, the method further comprises:
transmitting a first data packet to the router based on the second WIFI connection, the first data packet being a data packet accessing a network server through the router; and
receiving a second data packet from the router, the second data packet being a response data packet generated when the network server receives the first data packet.

13. The method according to any one of claims 10 to 12, wherein after the establishing a second WIFI connection, the method further comprises:
turning off the first WIFI connection.

14. The method according to any one of claims 10 to 13, wherein the second WIFI SSID is changed to a third WIFI SSID, and/or the second WIFI password is changed to a third WIFI password, and the method further comprises:
receiving a second operation of scanning, by the user, the target two-dimensional code;
acquiring, in response to the second operation, the first WIFI SSID and the first WIFI password based on the target two-dimensional code;
establishing the first WIFI connection with the router based on the first WIFI SSID and the first WIFI password;
acquiring attribute information of third WIFI from the router based on the first WIFI connection, the attribute information of the third WIFI comprising: the third WIFI SSID and the third WIFI password; and
establishing a third WIFI connection with the router based on the attribute information of the third WIFI.

15. The method according to claim 14, wherein after the establishing a second WIFI connection, the method further comprises:
receiving a third operation of the user; and
transmitting the attribute information of the third WIFI to the router in response to the third operation, the attribute information of the third WIFI being obtained by adjusting attribute information of second WIFI based on the third operation, the attribute information of the second WIFI comprising: the second WIFI SSID and the second WIFI password.

16. The method according to any one of claims 10 to 15, wherein the attribute parameters of the router comprise a serial number SN of the router, and the first WIFI SSID and the first WIFI password are determined based on the SN of the router.

17. The method according to any one of claims 10 to 16, wherein the acquiring a second WIFI SSID and a second WIFI password from the router based on the first WIFI connection comprises:
transmitting a first request to the router based on the first WIFI connection; and
receiving a first message from the router, the first message comprising the second WIFI SSID and the second WIFI password, and the first message being a message generated by the router in response to the first request.

18. The method according to claim 17, wherein before the transmitting a first request, the method further comprises:
transmitting a second request to the router; and
receiving a second message from the router, the second message comprising a symmetric key, the second message being a message generated by the router in response to the second request, and the first message being a message generated by the router by encrypting the second WIFI SSID and the second WIFI password with the symmetric key.

19. The method according to any one of claims 10 to 18, wherein before the establishing a first WIFI connection, the method further comprises:
acquiring a uniform resource locator URL from the target two-dimensional code;
transmitting a third request to a first server, the third request comprising the URL; and
receiving a third message from the first server, and displaying first prompt information in a first interface, the third message comprising at least one interface information corresponding to the URL, the at least one interface information comprising interface information corresponding to the first interface, the third message being a message generated by the server in response to the third request, and the first prompt information being used to prompt the terminal device to enter a scan-to-connect system.

20. The method according to claim 19, wherein after the displaying first prompt information in a first interface, the method further comprises:
displaying second prompt information in a second interface, the second prompt information being used to prompt that the terminal device is synchronizing first information, the first information comprising: the second WIFI SSID and the second WIFI password.

21. The method according to claim 20, wherein after the acquiring a second WIFI SSID and a second WIFI password from the router, the method further comprises:
displaying third prompt information and fourth prompt information sequentially in the second interface, the third prompt information being used to prompt that the first information is synchronized successfully in the terminal device, and the fourth prompt information being used to prompt that the terminal device is connecting to WIFI of the router.

22. The method according to claim 20, wherein the method further comprises:
when the first information is not detected, displaying fifth prompt information and sixth prompt information in the second interface, the fifth prompt information being used to prompt that the first information is unsuccessfully synchronized in the terminal device, and the sixth prompt information comprising at least one strategy used to reacquire the first information.

23. The method according to any one of claims 20 to 22, wherein after the establishing a second WIFI connection, the method further comprises:
displaying seventh prompt information in the second interface, the seventh prompt information being used to prompt that the terminal device is successfully connected to the router.

24. The method according to any one of claims 20 to 23, wherein the first information further comprises: information used to indicate whether wizard configuration of the router is completed, and the method further comprises:
transmitting a fourth request to the router when the information used to indicate whether wizard configuration of the router is completed indicates that the router does not complete the wizard configuration; and
receiving a fourth message from the router, the fourth message being a message generated by the router in response to the fourth request, the fourth message comprising an Internet access manner of the router, the Internet access manner of the router comprising: a point-to-point protocol over Ethernet PPPOE or a dynamic host configuration protocol DHCP.

25. The method according to any one of claims 10 to 24, wherein the target two-dimensional code is a mini program code.

26. A terminal device, comprising: a processor and a memory, wherein
the memory is configured to store a computer program; and
the processor is configured to invoke and execute the computer program, to cause the terminal device to perform the method according to any one of claims 10 to 25.

27. A computer-readable storage medium, configured to store a computer program, the computer program, when run on a computer, causing the computer to perform the method according to any one of claims 1 to 9 or perform the method according to any one of claims 10 to 25.
